# EUROPEAN PATENT APPLICATION

(11) **EP 2 599 408 A2**
(43) Date of publication of application: **05.06.2013**
(21) Application number: 10855401.5
(22) Date of filing: 30.07.2010
(51) Int. Cl.: A47F 8/00, A63H 3/46

(54) **ARTICULATED MANNEQUIN WITH VARIOUS ASSEMBLY MECHANISMS**

(71) Applicant: Innovative Moving Displays S. de R.L. De C.V., 44600 Guadalajara, Jalisco (MX)
(72) Inventor: SOTO VELASCO, Servando, 44950 Guadalajara, Jalisco (MX)
(74) Representative: Monzón de la Flor, Luis Miguel
(86) International application number: PCT/MX2010/000072
(87) International publication number: WO 2012/015290

(57) **Abstract**

This invention relates to an articulated mannequin, comprising various assembly mechanisms that keep the limbs thereof assembled, in which said limbs may be rigid or flexible as well as hollow or solid. Said assembly mechanisms include, at least: magnetic connection mechanisms, magnetic locking and connection mechanisms, adjustable locking and connection mechanisms, adjustable twisting and connection mechanisms, free movement and connection mechanisms, automated movement and connection mechanisms, compound disc mechanisms, double ball-and-socket joint mechanisms and compression ball-and-socket joint mechanisms. Said mechanisms are characterized in that they are inserted in the material of the limbs of the articulated mannequin, and in that they give the articulated mannequin a complete range of movement and versatility, enabling it to take up any human posture and be installed in almost any location. By virtue of said assembly mechanisms, the limbs of the articulated mannequin can: remain static in a given position; return automatically to a given position, after having been moved; be assembled around a dividing sheet; perform automated movements; and perform movements without resistance, when interacting with moving objects; thereby being able to be put to more uses, in the location where the articulated mannequin is positioned.

## Description

### TECHNICAL FIELD

The present invention relates to an articulated mannequin constituted by various assembling mechanisms that maintain its members assembled; wherein said assembly mechanisms are, at least: magnetic attachment, magnetic attachment and locking, adjustable attaching and locking, adjustable attachment and torsion, attaching and free movement, attachment and automated movements, composite discs, dual kneecap and compression kneecap mechanisms, which are characterized in that said mechanisms are inserted between the limbs of the articulated mannequin .

The above referred assembly mechanism provides the articulated mannequin with full mobility and versatility, allowing it to allowing it to adopt any human posture and allowing it to be installed almost anywhere, easing the dressing and undressing operations thereof; wherein said assembly mechanisms allow: that the articulated mannequin can stay in any assigned static position, that its members can automatically return to an assigned position, after they have been moved; that it can be assembled around a sheet that divides it; that it can perform automated movements and that it can make movements with no resistance when interacting with moving objects.

It should be mentioned that the members constituting the articulated mannequin can be hollow or solid, as well as rigid or flexible; wherein said assembly mechanisms can be installed and work properly with any of the aforementioned limb embodiments.

The object of the present invention is to provide an articulated mannequin having the features mentioned above, and also with other features which will be discussed throughout the present specification.

### BACKGROUND OF THE INVENTION

The mannequins or forms of human bodies are well known in the art since several years ago, which are used mainly to display clothing and / or accessories; they often comprise complete human bodies or only parts of the human body only, such as: half body, from the waist to the head or from the waist to the feet. The mannequins of human bodies are commonly shown with or without head, without articulated limbs and with assembly mechanisms that only fulfill the function of keeping its members together, so that it is necessary to disassemble at least one of its members to dress and undress the mannequins, such as: the arms or legs, complicating the task when reassembling those members, which is a waste of time, besides running the risk of an incorrect assembly that may cause breaking and / or malfunction of such assembly mechanisms.

It is worth mentioning that today there are mannequins of human bodies having articulated limbs, which are assembled together by means of mechanisms that are generally locking mechanisms; wherein said mannequins are described in the following patents just to name some: (US Pat. No. 105,718); (US Pat. No. 296,321); (US Pat. No. 6,409,516); (ES Pat. No. 2,245,575); (US Pat. No. 5,180,086); (US Pat. No. 6,203,396); (US Pat. No. 89,739); (US Pat. No. 5,630,745); (US Pat. No. 4,619,540); (US Pat. No. 6,257,467).

One of the disadvantages of the articulated mannequins mentioned above, is that their locking mechanisms are not firmly inserted between the material of its members, which are usually superimposed, assembled or bolted into the members, so that over of time and use, these locking mechanisms tend to loosen, causing a malfunction.

Other disadvantage of the above mentioned articulated mannequins, is that their locking mechanisms only have the function of keeping its members assembled with little locking force, which causes that with only its own weight or with some vibration, said members move from their assigned position.

Another disadvantages of the articulated mannequins aforementioned, are that: their assembly mechanisms cannot achieve that: its members automatically return to an assigned position after they have been moved; that they can be assembled around a dividing sheet; that they can perform automated movements; that they can make movements without resistance by interacting with other moving objects, or that their assembly mechanisms may have an embodiment in which they can be disassembled in order to give them maintenance, replace them or replace them with other assembly mechanism.

Another disadvantage with most of the aforementioned articulated mannequins, is that the anatomical shape of the junction points where their locking mechanisms are located, don't have a realistic human appearance, since to ensure that those members can move, the joints are designed with very rough shapes and unsightly, looking as if they were deformed.

Another disadvantage with the aforementioned articulated mannequins, is that in sections where their locking mechanisms are located, are commonly observed screws, nuts and / or parts of any component of the locking mechanism which joins the members, providing them with an unrealistic appearance, with many piercings and / or external cavities, which are not very pleasing to the eye.

In some inventions of articulated mannequins, they can only be adjusted the position of certain members of his body, wherein it is only possible to adjust the position of the head, arms, forearms, legs or calves; taking very limited and unrealistic postures, so that they do not give to the viewers the feeling that these articulated mannequins adopt natural postures, as would a human being.

It is worth mentioning that flexible mannequins of human bodies can adopt various positions, with the disadvantage that its cover normally comprises one piece, so that when the members are flexed, there are formed folds on the cover, which causes the flexible mannequin to look unrealistic and these folds tear the cover over time, causing the flexible mannequin to look deformed, anatomically disproportionate and unpleasant to the view. Another disadvantage is that usually, the external appearance of said flexible mannequins lacks details of both features of the face, and of the defined lines of the human body, since they have a spongy and unnatural appearance.

For this reason it is necessary an articulate mannequin that: can adopt any realistic human pose, that has joints throughout the body, that it can be dressed and undressed without dismounting any of its members, that the sections where the assembly mechanisms are located, have an anatomically realistic look, with no appearing internal components from the outside, such as screws or nuts, that its assembly mechanisms are firmly inserted between the material of its members, that the pressure and force of their assembly mechanisms can be adjusted; that their assembly mechanisms allow its members to return automatically to an assigned position, after they have been moved; that its members can be assembled around a dividing sheet; that its members can perform automated movements; that its members can perform moves without resistance, when interacting with moving objects; that its members can be hollow or solid, as well as rigid or flexible; that no folds or deformations can be formed on its cover; furthermore, that their assembly mechanisms have an embodiment in which they can be disassembled in order to provide maintenance to them, replace them or substitute them with other assembly mechanisms.

Thus it is achieved more ways of use where the current articulated mannequin is placed, as it has multiple options of assembly mechanisms, said articulated mannequin can be adapted and positioned as required.

### DETAILED DESCRIPTION OF THE INVENTION,

The present invention is related to various assembly mechanisms that can be installed in the actual articulated mannequin, wherein said invention is mainly related with a human appearance, capable of optimizing the use efficiency.

The characteristic details and methods for installing, assembling, adjusting and manipulating the various members and assembly mechanisms of the present articulated mannequin, are explained in the following description and are shown in the accompanying figures, which are mentioned by way of example and not to be considered as limiting the present invention.

The assembly mechanisms embedded in the various members of the articulated mannequin, are characteristics that result in greater benefits in their applications, thus facilitating the dressing and undressing manipulations of the articulated mannequin as well as ease of handling, based on the simplicity with which said articulated mannequin can be adjusted to adopt various postures; besides its ease to be transported from one place to another, because the materials making up, make it very light. Other advantages related to the articulated mannequin of the present invention, will be explained along the following description and are shown in the accompanying figures.

The object of the present invention is to provide an articulated mannequin with the above characteristics and others that will be discussed throughout the present specification, where one of its main advantages and utilities, are that it works as an articulated mannequin that provides a high visual impact and exhibits great versatility for apparel, footwear and / or accessories, as well as allowing effectively show: the benefits, features, benefits, dimensions and requirements of the products and / or services that are promoted, such as: the ergonomic furniture, the interior of a vehicle, the recommended use of certain products, etc., as well as strengthen the promotion of events, encouraging scenarios, creating environments, build scenery both ground and air, etc..

The object of the present invention is to provide an articulated mannequin with the above characteristics and others that will be discussed throughout the present specification, where one of its main advantages and utilities, are that it works as an articulated mannequin that provides a high visual impact and exhibits great versatility for exhibit footwear and / or accessories, as well as allowing to effectively show: the advantages, features, benefits, dimensions and requirements of the products and / or services that are promoted, such as: the ergonomy of furniture, the interior of a vehicle, the recommended use of certain products, etc., as well as strengthen the promotion of events, animating scenarios, creating environments, build scenery both ground and aerial, etc..

Another advantage of the articulated mannequin of the present invention, is that it is not necessary to disassemble and assemble its arms and / or legs to dress and undress it, as this represents a problem for conventional mannequins, because these members often deteriorate each time these activities are carried out, often causing the mannequin to be unusable and having to be replaced by another.

The members making up the articulated mannequin may be rigid or flexible, as well as hollow or solid, wherein is preferable that they are rigid and hollow, flexible or solids, to ensure that its weight is light, wherein the material can be plastic, fiberglass, resin, polyurethane, cardboard or any other combination of materials, compounds and / or substances which, when mixed, can maintain the shape of the interior of molds that will form the members of the articulated mannequin. It is preferable that the material be plastic, so that its weight is very light and resistant to shocks and / or falls, thereby preventing breaking, and also so it can be easily and safely manipulated.

For clarity with respect to the arrows of the referred symbols in the figures accompanying the present invention, it is explained:
The arrow 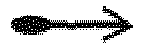 refers to an assembly mechanism.
The arrow → refers to a member or a component pertaining to an assembly mechanism
The arrow 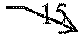 refers to a joining point or a part of a member or component
The arrow 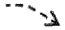 refers to a hidden member or to an internal or hidden part of a member or component.

Below is Table 1, which aims to facilitate interpretation of the references therein, with respect to the accompanying figures:

**Table 1. References to components and elements that constitute the present invention.**

| ***REF*** | ***DESCRIPTION*** |
|---|---|
| (1) | Hemispherical connecting piece |
| (2) | Head. |
| (2a) | Vertical cavity of the head (2). |
| (2b) | Orifice of the vertical cavity (2a) of the head (2). |
| (2c) | Cylindrical cavity of the vertical cavity (2a) of the head (2). |
| (2d) | Strangulation section of the cylindrical cavity (2c). |
| (3) | Torso |
| (3a) | Upper torso. |
| (3b) | Lower torso. |
| (3c) | Neck of the torso (3). |
| (3d) | Vertical Cavity of the neck (3c). |
| (3e) | Horizontal cavities of the torso (3). |
| (3f) | Flat surface of the horizontal cavities (3e) of the torso (3). |
| | Hip |
| (4a) | Horizontal cavities of the hip (4). |
| (4b) | Flat surface of the horizontal cavities (4a) of the hip (4). |
| (5) | Arms |
| (5a) | Biceps |
| (5b) | Elbow |
| (6a) | Forearm |
| (6b) | Arm |
| (7) | Leqs |
| (7a) | Upper thigh |
| (7b) | Lower thigh |
| (8a) | Calf |
| (8b) | Foot |
| (9a) | Upper section of the articulated mannequin |
| (9b) | Lower section of the articulated mannequin |
| (10) | Joining points located between torso (3) and the upper hemispherical connecting pieces |
| (10a) | Joining point located between upper torso (3a) and lower torso (3b) |
| (11) | Joining points located between the upper hemispherical connecting pieces (1) and the biceps (5a) |
| (12) | Joining points located between the biceps (5a) and elbows (5b). |
| (13) | Joining points located between elbows (5b) and forearms (6a) |
| (14) | Joining points located between torso (3) and hip (4). |
| (15) | Joining points located between hip (4) and the lower hemispherical connection pieces (1) |
| (16) | Joining points located between the lower hemispherical connection pieces (1) and upper thighs (7a). |
| (17) | Joining points located between upper thighs (7a) and lower thighs (7b) |
| (18) | Joining points located between lower thighs (7b) and calf (8a) |
| (19a) | A lateral view of a representation of the rotating axis of the assembly mechanisms. |
| (19b) | A frontal view of a representation of the rotating axis of the assembly mechanisms. |
| (20) | Smooth disk. |
| (20a) | Flat surface of the disks. |
| (20b) | Flange of the disks |
| (20c) | Central orifice of the disks. |
| (20d) | Central orifice of the disk having a compartment (22) |
| (21) | Disk having an adjacent orifice. |
| (21a) | Adjacent orifice of the disk having an adjacent orifice (21) |
| (22) | Disk having a compartment |
| (22a) | Cylindrical compartment of the disc having a cylindrical compartment (22). |
| (22b) | Central orifice of the cylindrical compartment (22a). |
| (22c) | Adjacent orifice of the cylindrical compartment (22a). |
| (22d) | Slotted disk having a compartment. |
| (23) | Torsion spring |
| (24) | Radial load bearing |
| (25) | Slotted disk. |
| (25a) | Peripheral circular slot. |
| (25b) | Small bullets |
| (25c) | Axial load bearing |
| (26) | Disk having spherical protuberances. |
| (26a) | Spherical protuberances |
| (26b) | Flange folds (20b, 26f and 30b) |
| (26c) | Flange cuts (20b, 26f and 30b) |
| (26d) | Disk having spherical protuberances without flanges. |
| (26e) | Ironwork having a flange |
| (26f) | Flange of the ironwork having a flange (26e) |
| (27) | Disk having spherical cavities |
| (27a) | Spherical cavities |
| (28a) | Cross section of the disk having spherical cavities (27) |
| (28b) | Cross section of a composite disk |
| (29) | Disk having radial slots |
| (29a) | Concave radial slots |
| (29b) | Convex radial slots |
| (30) | Insertion base |
| (30a) | Flat surface of the insertion base (30) |
| (30b) | Edge of the insertion base (30). |
| (30c) | Central orifice of the insertion base (30). |
| (30d) | Conical or cylindrical cavity of the insertion base (30). |
| (30e) | Threaded orifices of the insertion base (30). |
| (31') | Coupling disks of the composite disks, such as the coupling disks (31, 33, 34 and 36). |
| (31) | Coupling disk having an adjacent orifice. |
| (32) | Conical orifices of the coupling disks (31') |
| (33) | Coupling disk having a compartment. |
| (34) | Smooth coupling disk. |
| (35) | Motor |
| (35a) | Axle of the motor (35) |
| (35b) | Flat surface of the axle (35a.) |
| (35c) | Partially circular slot of the simple disks and of the coupling disks (31') |
| (35d) | Motor cables (35). |
| (35e) | Cables and/or hoses of pistons, sensors, fans or any other electrical, electronic, mechanical, pneumatic and/or hydraulic devices. |
| (36) | Coupling disk having a central guide orifice. |
| (36a) | Central orifice of the disks having a central guide orifice (36). |
| (37) | Magnetic joining mechanism. |
| (37a) | Divider sheet. |
| (38) | Magnet |
| (39) | Magnetic joining and locking mechanism. |
| (40) | Joining and adjustable locking mechanism having a fixed screw |
| (41) | Fixed screw of the mechanisms. |
| (42) | Expansion spring. |
| (43) | Square nut. |
| (44) | Square cover of the square nut (43) and of the expansion spring (42). |
| (44a) | Orifice of the square cover (44). |
| (45) | Joining and adjustable locking mechanisms having a movable screw. |
| (46) | Movable screw of the mechanisms. |
| (47) | Conventional washer |
| (48) | Tube of the joining and adjustable locking mechanism having a movable screw. |
| (49) | Screw cover. |
| (49a) | Perforation guide of the screw cover (49). |
| (49b) | Cavity of the screw cover (49). |
| (50) | Adjustable joining and torsion mechanism (50) |
| (51a) | Perforated screw. |
| (51a') | Perforation of the perforated screw (51a) |
| (51b) | Slotted screw |
| (51b') | Slot of the slotted screw (51b) |
| (51c) | Lock. |
| (52) | Conventional nut |
| (53) | Joining and double adjustable locking mechanism |
| (54) | Threaded rod. |
| (55) | Joining and automated movement mechanism. |
| (56) | Screws having a conical head. |
| (57) | Nut having a nylon insert, also called security nut. |
| (58) | - |
| (59) | - |
| (60) | Complementary piece |
| (61) | Perforating guide of the members. |
| (62) | Closed half sphere portion |
| (63) | Preferably closed semicylindrical or semiconical portion |
| (64) | Transition portion. |
| (65) | Circular flat surface of the members |
| (66) | Partially circular flat surface of the members. |
| (67) | Portion that resembles an anatomic form of a bicep. |
| (68) | Central orifice of the members. |
| (69) | - |
| (70) | Diagonal flange |
| (71) | Flange type "Z". |
| (72) | Hollow member |
| (73) | Solid member |
| (74) | Flexible wires. |
| (75) | - |
| (76) | - |
| (77) | - |
| (78) | - |
| (79) | - |
| (80) | Compression kneecap mechanism |
| (81) | Joining points located between forearms (6a) and hands (6b). |
| (82) | Joining points located between calves (8a) and feet (8b). |
| (83) | Partially spherical protuberance of the hands (6b) and feet (8b). |
| (84) | Conical cavity of the hands (6b) and feet (8b). |
| (84a) | Flat surface of the conic cavity (84) |
| (85) | Partially spherical cavity of the forearms (6a) and calves (8a). |
| (85a) | Circular orifice of the forearms (6a) and calves (8a). |
| (86) | Threaded washer. |
| (87) | Eyebolt |
| (88) | Compression spring. |
| (89) | Perforation of the flanges (20b, 26f and 30b). |
| (90) | Joining point located between torso (3) and head (2). |
| (91') | Double kneecap mechanism |
| (91) | Kneecap. |
| (91 a) | Kneecap cut in half. |
| (91 b) | Spherical protuberance of the kneecap (91) |
| (91 c) | Spherical cavity of the kneecap (91) |
| (91 d) | Cylindrical section of the kneecap (91). |
| (91 e) | Central perforation of the kneecap (91). |
| (92) | Screw of the double kneecap (91') mechanism |
| (93) | Ironwork of the double kneecap (91') mechanism |
| (94) | Rod of the double kneecap (91') mechanism |
| (95) | Tube of the double kneecap (91 ') mechanism. |
| (96a) | Base of the conventional kneecap (96). |
| (96b) | Stem of the conventional kneecap (96). |
| | |

### BRIEF DESCRIPTION OF THE DRAWINGS

In the following description, reference is made to the attached figures, which show and describe the specific details of the present invention, wherein said figures include references to provide a complete understanding of the articulated mannequin of the present invention and its various assembly mechanisms. It will be obvious to a person skilled in the art, that the present invention may be practiced without specific details. In order to avoid saturating the present invention, the well-known techniques are not demonstrated nor discussed in detail.

It should be mentioned that in order to exemplify the way of carrying out the present invention, it was used the anatomical shape of the human body, so that said shape may be of any other entity, such as the body of an animal, a strange being or an object.
Figure 1 is a front view of the articulated mannequin of the present invention in a standing posture and firm; where are observed the different members (1 - 9b) that comprise it, and the location of its various joining points (10-18, 81, 82 and 90) by representing the rotation axis of its assembly mechanisms, from a lateral view (19a) or from a front view (19b) as appropriate; additionally, there are also highlighted one of the two horizontal cavities (3e) of the torso (3) and one of the two horizontal recesses (4a) of the hip (4).
Figure 2 is a side view of the articulated mannequin of the present invention in a posture that simulates the action of running; where are observed the different members (1 - 9b) that comprise it, and the location of its various joining points (10 - 18, 81, 82 and 90), by representing the rotating axis assembly of its assembly mechanisms, seen from the side (19a) or from the front (9b) as appropriate.
Figure 3 is a side view of the head (2) and the neck (3c) of the torso (3), which are shown disassembled and with its transparent cover to display their respective cavities (2a, 2c and 3d), and as also to display a double kneecap mechanism (91'), which corresponds to the assembly mechanism that keeps them together and that allows that said head (2) can move in any direction.
Figure 4 illustrates a kneecap (91) of the double kneecap mechanism (91') above mentioned, where the outer sections (91 by 91 d) that conform it, are observed.
Figure 5 illustrates a kneecap cut in half (91 a) of the double kneecap mechanism (91') above mentioned, where there are observed the interior sections (91 c and 91 e) that comprise them.
Figure 6 show a conventional kneecap (96), which substitutes the double kneecap mechanisms (91') mentioned above.
Figure 7 is a perspective exploded view of a magnetic joining mechanism (37).
Figure 8 is a perspective view of the magnetic joining mechanism (37) mentioned before, which is shown assembled around a divider sheet (37a).
Figure 9 is a perspective exploded view of a magnetic joining and locking mechanism (39).
Figure 10 is an exploded perspective view of an adjustable joining and locking mechanisms having a fixed screw (40).
Figure 11 is an exploded perspective view of an adjustable joining and locking mechanism having a movable screw (45).
Figure 12 is a perspective view of an adjustable joining and double locking mechanism (53), which is shown partially assembled.
Figure 13 is a perspective exploded view of an adjustable joining and torsion mechanism (50).
Figure 14 is a perspective view of the first disc (22) of the adjustable joining and torsion mechanism (50) above mentioned, which is shown in a sectioned way; in order to shown more clearly the inside of the cylindrical compartment (22a); where it is also observed a torsion spring (23) and a radial load bearing (24).
Figure 15 is a perspective view of a perforated cylinder (51 a), a slotted screw (51 b) and a lock (51 c).
Figure 16 is a perspective view of a slotted disk (25), which is observed with several small bullets (25b) located over its peripheral circular slot (25a).
Figure 17 is a perspective view of an axial load bearing (25c), which substitute the small bullets (25b) mentioned before.
Figure 18 is a perspective view of a slotted disk having a compartment (22d).
Figure 19 is a lateral view of two hemispherical connecting pieces (1) and of complementary piece (60); which are shown partially assembled and having its transparent cover for showing the assembly mechanisms located in its interior.
Figure 20 is a perspective view of the two hemispherical connecting pieces (1) mentioned before and shown in Figure 19, which are shown disassembled and with its opaque cover.
Figure 21 is a perspective assembled view of a hemispherical connecting piece (1) and of a biceps (5a).
Figure 22 is a perspective view of a biceps (5a), where there are observed spherical protuberances (26a), spherical cavities (27a) and central orifices (68) located over its flat surfaces (65 and 66), which form part of its cover.
Figure 23 is a frontal view of an insertion base (30).
Figure 24 is a frontal view of an insertion base (20).
Figure 25 is a frontal view of a coupling disk having a compartment (33).
Figure 26 is a frontal view of a smooth coupling disk (34).
Figure 27 is a frontal view of a coupling disk having a central guide orifice (36).
Figure 28 is a perspective exploded view of a joining and automated movement mechanism (55).
Figure 29 is a frontal view of a cross section (28a) of the disk having spherical cavities (27) shown in figure 11; where it is observed that said disk having spherical cavities (27) comprises a diagonal flange (70) and is inserted in a hollow member (72).
Figure 30 is a frontal view of the cross section (28a) above mentioned, with the difference that in this case it is observed that the disk having spherical cavities (27) comprises a flange type "Z" (71) and that it is inserted in a solid member (73).
Figure 31 is a frontal view of the cross section (28b) of the composite disk shown in Figure 28; where it is observed that its insertion base (30) comprises a flange type "Z" (71), besides that it is inserted in a solid member (73) together with a smooth coupling disk (34) and one of its screws having a conical head (56).
Figure 32 is a perspective view of a disk having radial slots (29); where it is observed that its flange (20b) is type "Z" (71).
Figure 33 is a perspective view of a disk having spherical protuberances without flanges (26d); where it is observed that it has an ironwork having a flange, concentrically joined therein.
Figure 35 is a perspective view of a disk having spherical protuberances (26), where it is observed that its flange (20b) has several cuts (26c).
Figure 36 is a perspective view of a forearm (6a) and of a hand (6b); where there are observed in a disassembled way and wit its transparent cover, showing its respective cavities (84 and 85); as well as for showing a compression kneecap mechanism (80).

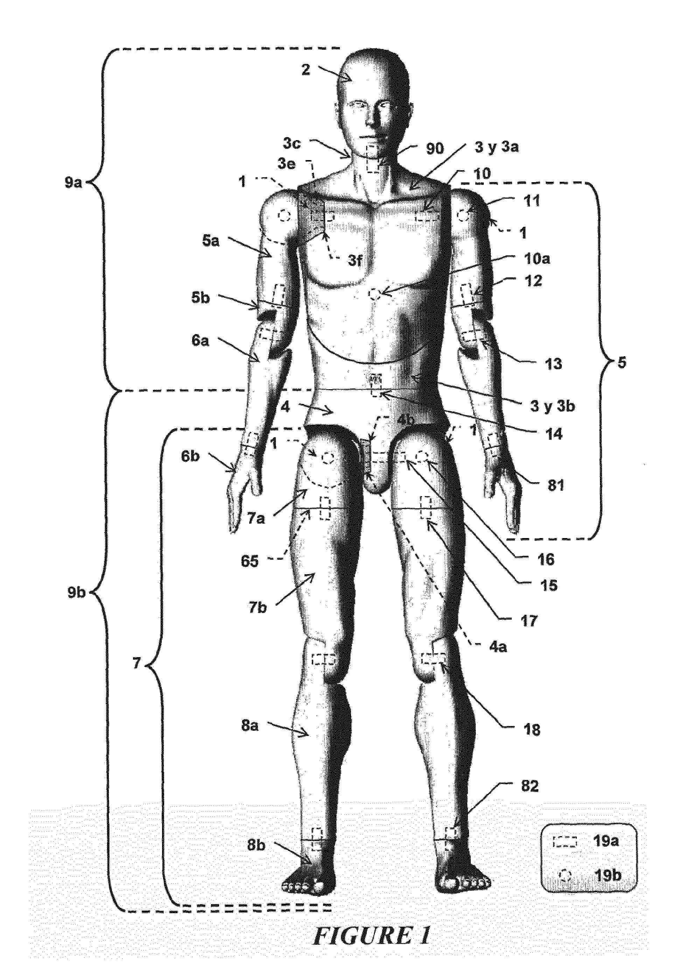

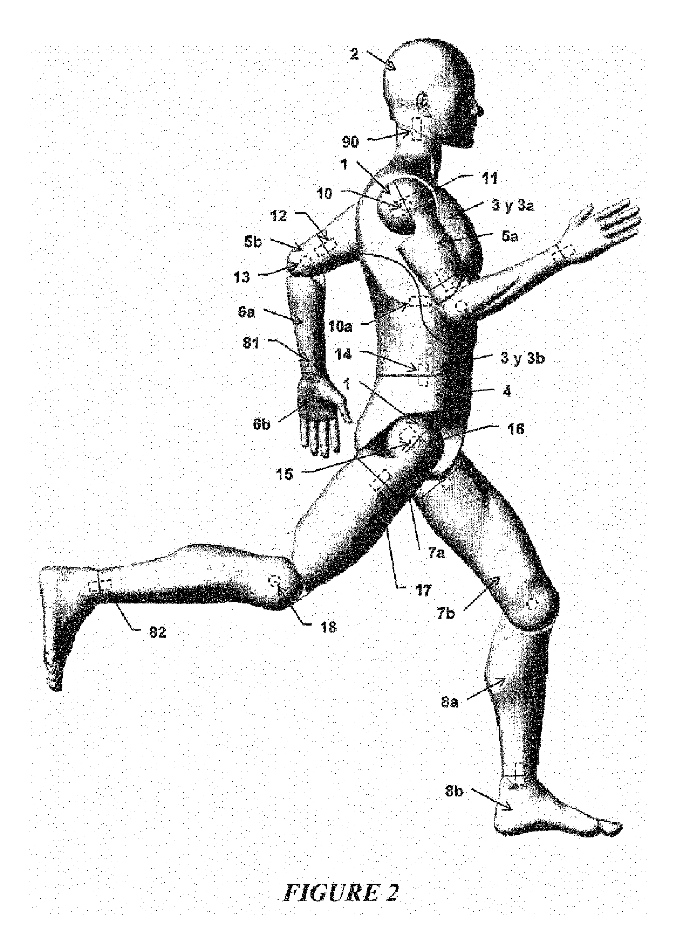

With reference to Figures 1 and 2 above mentioned, it will be seen that the articulated mannequin of the present invention is formed by at least the following members: a head (2), a torso (3), two upper hemispherical connecting pieces (1), two biceps (5a), two elbows (5b), two forearms (6a), two hands (6b), a hip (4), two lower hemispherical connecting pieces (1), two upper thighs (7a), two lower thighs (7b), two calves (8a) and two legs (8b).

The aforementioned members are kept assembled together by means of assembly mechanisms, which are located at joining points (10, 11, 12, 13, 14, 15, 16, 17, 18, 81, 82 and 90) located between: the head (2) and the torso (3),; the torso (3) and the two upper hemispherical connecting pieces (1); the upper hemispherical connecting pieces (1) and the biceps (5a); the biceps (5a) and elbows (5b); the elbows (5b) and the forearms (6a); the forearms (6a) and the hands (6b); the torso (3) and the hip (4); the hip (4) and the lower hemispherical connecting pieces (1); the lower hemispherical connecting pieces (1) and the upper thighs (7a); the upper thighs (7a) and lower thighs (7b); the lower thighs (7b) and calves (8a); and between calves (8a) and feet (8b).

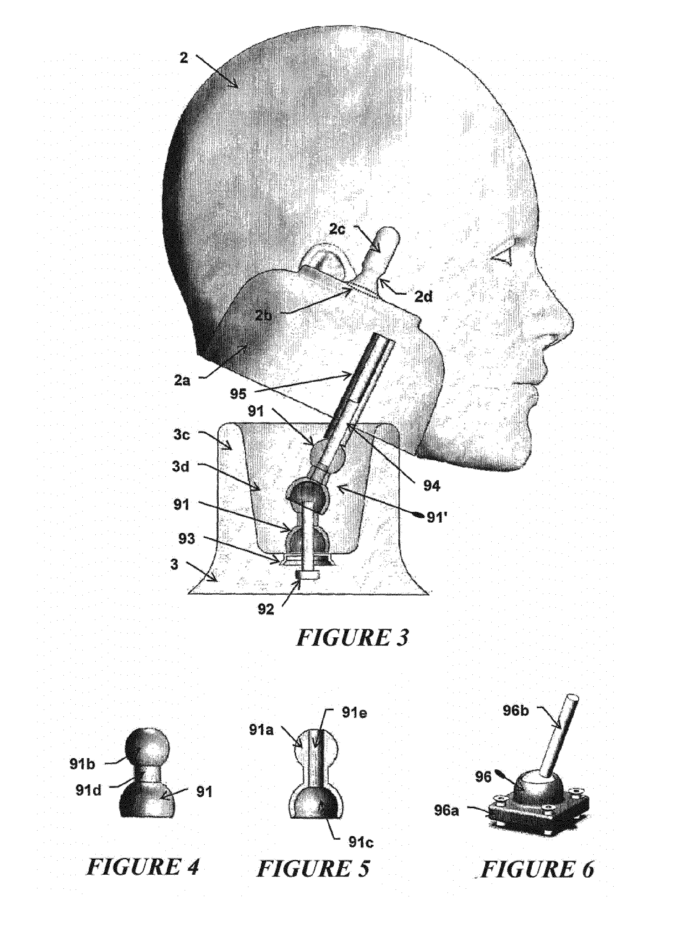

The head (2) above mentioned comprises a vertical cavity (2a) located on its lower portion, which in turn comprises at least one orifice (2b) located at its upper portion, as shown in Figure 3. Said vertical cavity (2a) is placed around the neck (3c) of the torso (3), which is located in the central upper portion of the torso (3), wherein said neck (3c) is cylindrical, at least in its upper portion, besides comprising a vertical cavity (3d) concentrically located within.

The head (2) is held assembled with the torso (3) by a coupling mechanism, which is a double kneecap mechanism (91'), which is located inside the cavities (2a and 3d) of the head (2) and of the neck (3c), as seen in Figure 3; wherein said double kneecap mechanism (91') comprises at least: two kneecaps (91), a screw (92), an ironwork (93) and a rod (94); wherein each kneecap (91) comprises at least: a spherical protrusion (91 b), a spherical cavity (91 c) and a central hole (91 e) crossing longitudinally through it,, as seen in the Figures 3, 4 and 5.

A variant of the kneecap (91) above mentioned, further comprises a cylindrical section (91 d) which is located between the spherical protuberance (91 b) and its spherical cavity (91 c); in order that said kneecap (91), by having its protrusions (91 b and 91 c) farther apart, may have a greater degree of movement.

The manner of assembly of the double kneecap mechanism (91') mentioned above, is just as the order of the components of Figure 3 is observed, which is explained below: an ironwork (93) concentrically perforated and widened at its inferior part, is inserted below the vertical cavity (3d) of the neck (3c), in addition that a screw (92) passes vertically through its central perforation, being firmly joined to said ironwork (93), where the ironwork (93) together with the screw head (92), are inserted between the material of the neck (3c); subsequently a first kneecap (91) is fixed to the screw (92) inserted into the vertical cavity (3d) of the neck (3c), leaving said screw (92) introduced to the central perforation (91 e) of the said first kneecap (91), while a second kneecap (91) is joined to the first kneecap (91), wrapping with its spherical cavity (91 c) the spherical protuberance (91 b) of said first kneecap (91); which once assembled, maintain a constant pressure that prevents the head (2) to move out of position by its own weight; wherein in addition, one end the rod (94) is inserted into the central bore (91 e) of the second kneecap (91), and the other end of said rod (94) is inserted into the orifice (2b) of the cavity (2a) of the head (2).

The double kneecap mechanism (91 ') mentioned above, allows that the head (2) of the articulated mannequin can be moved in any direction, remaining fixed in the assigned position; it further enables said head (2) to be manually mounted and dismounted from the torso (3), without using any tool.

Another variant of the double kneecap mechanism (91 ') mentioned above, is that it may be comprised by more than two kneecaps (90); in order that the head (2) can be placed in a larger number of positions.

Another variant of the double kneecap mechanism (91') above mentioned, is that it can be replaced by a conventional kneecap (96), of the kind that have at least one base (96a) and a stem (96b), similar to the one shown in Figure 6, which has its base (96a) screwed or riveted on the inferior part of the vertical slot (3d) of the neck (3c); where the stem (96b) is inserted into the hole (2b) the cavity (2a) of the head (2), in order to provide the head (2) with other alternatives in which it can be assembled with the torso (3).

A variant of the double kneecap mechanism (91') and of the conventional kneecap (96), comprise a tube (95) located at the upper end of the rod (94) or the stem (96b), as appropriate, in order that said pipe (95) serves as an extension for assembling the head (2) with the torso (3).

A variant of the head (2), comprises a cylindrical cavity (2c) concentrically located over the orifice (2b) that is located in the upper part of its cavity (2a), as shown in Figure 3 , in order that said cylindrical cavity (2c) serves as a bump for the upper end of the rod (94), in order that the stem (96b) of the conventional kneecap (96) or of the tube (95) accordingly, is introduced into the head (2) at a specific depth.

A variant of the cylindrical cavity (2c) of the head (2), comprises at least one strangulation section (2d), as seen in Figure 3; in order that the head (2) does not remain loose, because such strangulation section (2d) will be maintained at a constant pressure around the rod (94), the stem (96b) of the conventional kneecap (96) or tube (95) accordingly.

The torso (3) above mentioned, also comprises two horizontal cavities (3e), which are located on the lateral sides of its upper portion, whose lower ends end on a flat surface (3f); as well as the hip (4) comprises two horizontal cavities (4a), located on the lateral sides of its inferior portion, whose lower ends end in a flat surface (4b), as seen in Figure 1.

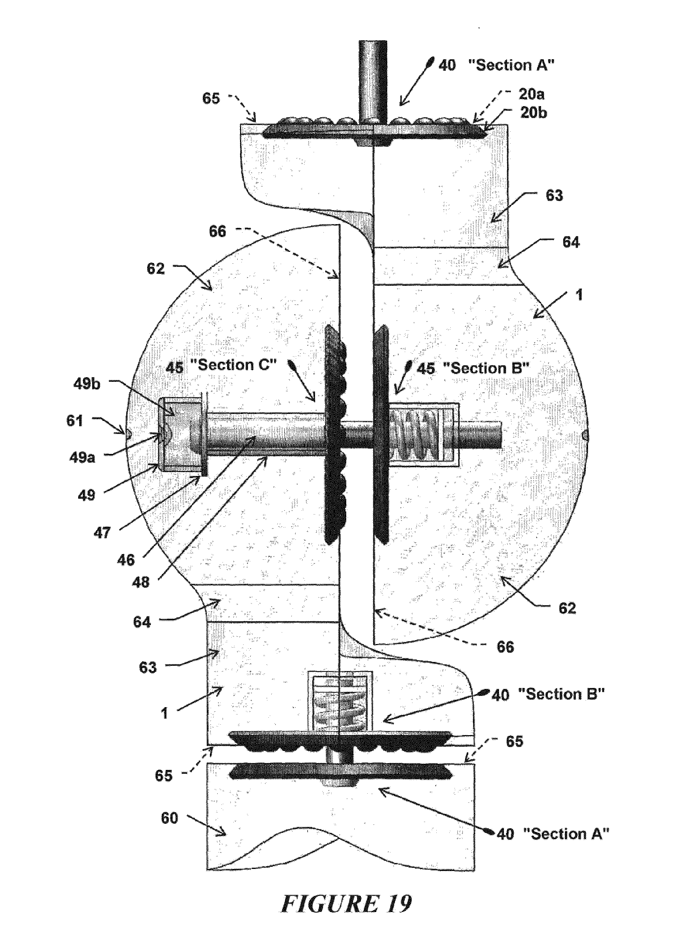

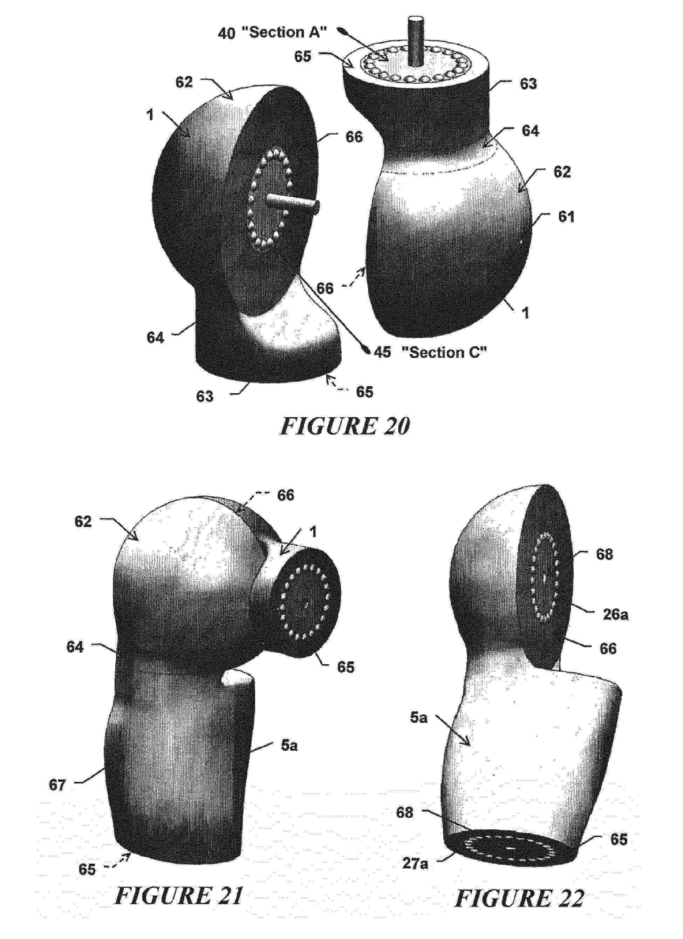

A variant of the torso (3) above mentioned, is that it is divided into two members: an upper torso (3a) and a lower torso (3b) which are held assembled together by means of a coupling mechanism located in its joining point (10a), as seen in Figures 1 and 2; in order that the articulated mannequin can adopt postures in which it is required that the torso (3) rotates toward one of its sides. The hemispherical connecting pieces (1) above mentioned, are formed by at least a closed half sphere portion (62) and a preferably closed semicylindrical or semiconical portion (63), both joined by a transition portion (64), so that the flat surfaces (65 and 66) of both portions (62 and 63) are arranged at least perpendicular to each other, as seen in Figures 19 and 20; wherein the flat surface (65) of the closed semicylindrical or semiconical portion (63), is making contact with the flat surfaces (3f, 4b) of the horizontal cavities (3e and 4a) of the torso (3) and the hip (4), whereby said hemispherical connecting pieces (1) are horizontally arranged.

Figure 20 is a perspective view of two hemispherical connecting pieces (1) above mentioned, and shown in Figure 19, where there are shown in a disassembled way and with an opaque surface, in order to show the distribution of their portions (62 , 63 and 64) and its planar surfaces (65 and 66) mentioned above, from a different angle.

In the biceps (5a) illustrated in Figures 21 and 22, it can be seen that the current members of the articulated mannequin such as the biceps (5a), elbow (5b), forearm (6a), upper thighs (7a), lower thighs (7b) and calves (8a) have a similar configuration as the hemispherical connecting piece (1) above referred, with the difference that its closed semicylindrical or semiconical portion (63) resembles at least to the anatomical shape of a biceps (67), an elbow, of a forearm, of an upper leg, a thigh and a calf respectively.

In Figure 21 are shown in an assembled and opaque way, a hemispherical connecting piece (1) with a biceps (5a), in order to show by way of example, the way that the members that interact with the hemispherical connecting pieces (1) would appear when they are physically assembled; it will be seen that once assembled, these members, together with the hemispherical connection piece (1), partially acquire the shape of a sphere.

The members containing a closed half sphere portion (62), have the advantage that when moving from a position, will always maintain at least the shape of a portion of a sphere, thus achieving that said members maintain a softened form in any position in which they are positioned, avoiding that clothes that the articulated mannequin is wearing, do not tear or break.

The flat surfaces (65) of the members, which are located at the joining points (10, 12, 15, 17, 81 and 82) positioned: between the flat surfaces (3f) of the horizontal cavities (3e) of the torso (3) and of the upper hemispherical connecting piece (1), between the biceps (5a) and elbows (5b); between the forearms (6a) and hands (6b); between the flat surfaces (4b) of the horizontal cavities (4a) of the hip (4) and the lower hemispherical connecting piece (1), between the upper thighs (7a) and lower thighs (7b); and between the calves (8a) and feet (8b); are at least, circular flat surfaces (65), as seen in Figures 1 and 2;

The flat surfaces (66) of the members, which are located at the joining points (10a, 11, 13, 14, 16 and 18) positioned: between the upper torso (3a) and the lower torso (3b), between the upper hemispherical connecting pieces (1) and biceps (5a); between elbows (5b) and forearms (6a); between the the torso (3) and hip (4) between the lower hemispherical connecting piece (1) and upper thighs (7a); and between the lower thighs and (7b) and calves (8a); are at least, partially circular flat surfaces (66), as seen in Figures 1 and 2.

The purpose that both the circular flat surface (65), and the partly circular flat surface (66) above mentioned, be flat, is to achieve that the various members of the articulated mannequin, can be accurately assembled together; and also so that said flat surfaces (65 and 66) be aligned with the flat surfaces (20a and 30a) of the assembly mechanisms that are inserted.

The articulated mannequin of the present invention maintains the members assembled together by at least one type of assembly mechanism mentioned below: magnetic joining mechanisms (37), magnetic joining and locking (39), Joining and adjustable locking mechanism having a fixed screw (40), joining and adjustable locking mechanisms having a movable screw (45), Joining and double adjustable locking mechanism (53), adjustable joining and torsion mechanism (50), joining and simple free movement (not shown), joining and free movement for working with radial loads (not shown), joining and free movement for working with axial loads (not shown), joining and free movement for working with radial and axial loads (not shown), and joining and automated movements (55) and composite discs, wherein said assembly mechanism is characterized by being inserted between the material of the articulated mannequin of the present invention, thus avoiding that they move, loosen and /or detach from the member to which they are attached.

To avoid saturating the images that accompany the present invention there are not illustrated the threads of the screws, nuts, washers, rods, shafts and threaded holes mentioned in the following description.

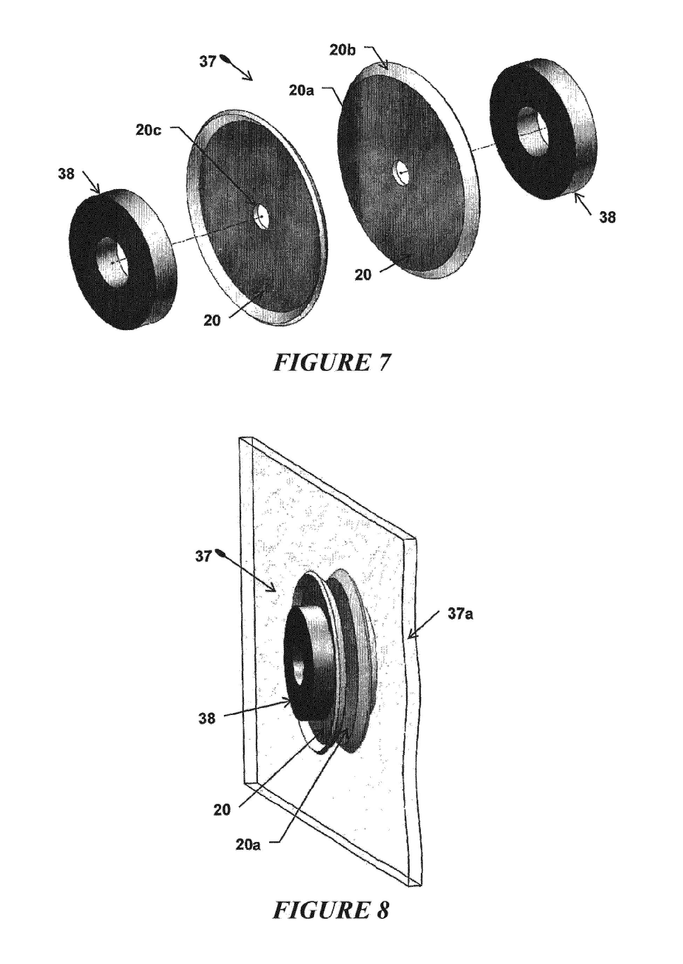

Figure 7 shows an exploded view of the magnetic joining mechanism (37) above mentioned, which is comprised by at least: two smooth disks (20), whose perimeter is surrounded by a flange (20b) which is projected with a certain angle to one of its sides, and two magnets (38) held together concentrically on the flat surface (20a) of the smooth discs (20), of the side where its flange (20b) is projected; wherein said magnetic joining mechanism (37) is maintained assembled together, thanks to the magnetic attraction force of the magnets (38), besides that their smooth discs (20) remain parallel and concentric to each other, so that their flanges (20b) are located in opposite directions.

The smooth discs (20) above mentioned are inserted in the members of the articulated mannequin of the present invention, because its flange (20b) is submerged in the material of said members, besides its flat surface (20a) is exposed and aligned with the flat surface (65 or 66) of the member in which they are attached, similarly as the locking disks (26 and 27) that are inserted in a Hemispherical connecting pieces (1) of Figure 19.

The magnetic joining mechanism (37) above referred, can be assembled around a divider sheet (37a), as seen in Figure 8, where for example, said divider sheet (37a) may be a glass sheet, a wood sheet, a metal plaque or any other object that stands between the two smooth discs (20), where is preferable that the divider sheet (37a) be flat, so that the flat surface (20a) of the smooth discs (20) is properly supported on the surface of said divider sheet (37a) and which is also thin, so that the magnets (38) are able to maintain joined the magnetic joining mechanism (37) with greater force.

An antiskid film (not shown) may be placed on the flat surface (20a) of the smooth discs (20) above referred, on the opposite side where its flange is projected (20b), in order to prevent that the smooth discs (20) of the magnetic joining mechanism (37), slip between them, so as also to prevent them to slip on the divider sheet (37a) above referred, thus avoiding its scratching.
One of the many applications of the magnetic joining device (37), is that it is able to maintain the body of the articulated mannequin assembled with an interposed divider sheet (37a), wherein the magnetic joining mechanism (37) can be inserted in almost any member of the articulated mannequin of the present invention; for example the hip (4) may be positioned on one side of the divider plate (37a) and the torso (3) on the opposite side, both members assembled together by at least one magnetic joining mechanism (37); thereby achieving that the body of the articulated mannequin, look like it is crossing the divider sheet (37a) or like it is floating.

Another of the many applications of the magnetic joining mechanism (37), is that it is able to maintain itself attached to the same member with a divider sheet (37a) being interposed, i.e. a single member that has been divided in two or more sections since its manufacture, will have one or more magnetic joining mechanisms (37) inserted into the surfaces resulting from said division, for example, if the forearm (6a) was divided in two sections since its manufacture and have a magnetic joining mechanism (37) inserted the areas resulting from said division, it can be achieved that one portion of the forearm part (6a) is situated on one side of the divider plate (37a) and the other part of the forearm (6a) is situated on the opposite side, where the forearm sections (6a) are held together by said magnetic joining mechanism (37), thereby achieving that the forearm (6a) look like it is crossing the divider sheet (37a) or like I is floating.

A variant of the smooth disks (20) further comprise a central orifice (20c) having the geometric shape of a circle, in order that a preferably cylindrical object pass through said central hole (20c), for example a screw, a rod or a shaft.

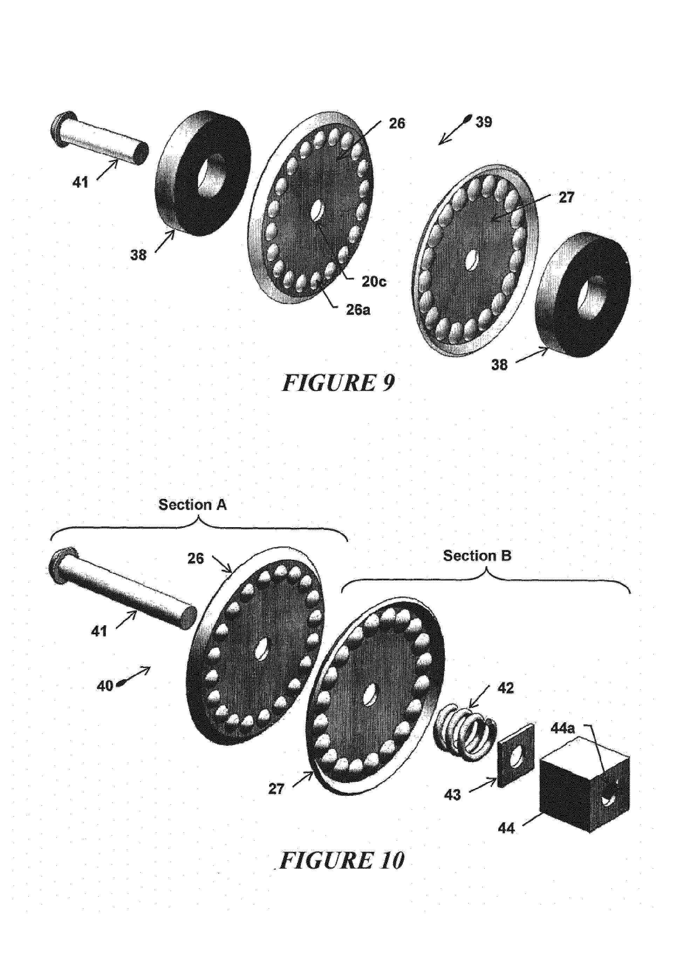

Figure 9 shows and exploded view of the Magnetic joining and locking mechanism (39) above referred, which is comprised by at least: a disk having spherical protuberances (26), a disk having spherical cavities (27), a fixed screw (41) and two magnets (38), where the disk having spherical protuberances (26) is similar to the smooth disks (20) of the magnetic joining mechanism (37) above referred, with the difference that it also has several spherical protuberances (26a) radially disposed on its flat surface (20a) on the opposite side where its flange (20b) is projected; in the same way as the disk with spherical cavities (27) is similar to said smooth disks (20), with the difference that also contains several spherical cavities (27a) radially disposed on its flat surface (20a) on the opposite side where its flange (20b) is projected, which are aligned with said spherical protuberances (26a), where each magnet (38) is concentrically located on the flat surface (20a) of said disks (26 and 27), on the side where its flange (20b) is projected and the fixed screw (41) passes at least through the center of both disks (26 and 27), being joined to one of them (26 or 27), keeping them aligned and concentric, so that when said discs (26 and 27) approach, it will exert a magnetic attraction force between them, which causes the spherical protuberances (26a) to enter the spherical cavities (27a), which are held together and locked; whereby when said disks (26 and 27) are rotated about its rotating axis, they move in equidistant steps by the amount of spherical protuberances (26a) and spherical cavities (27a) that they contain, thereby achieving that the members containing said magnetic joining and locking mechanism (39), are kept locked and at a constant pressure at any position in which they are found.

The fixed screw (41) of the attachment mechanism and magnetic joining and locking mechanism (39) above, is able to operate properly with or without a thread, because its main function is to maintain the disks having spherical protuberances (26) aligned and concentric with the disk having spherical cavities (27) above referred without the need to be screwed in any nut or thread.

A variation of the magnetic joining mechanism (37) and of the magnetic joining and locking mechanism (39) above referred, comprises only a magnet (38); where at least the disk (20, 26 or 27) that does not containing the magnet (38), should be made of a metal having magnetic attraction characteristics, in order that these assembly mechanisms, contain a smaller number of components.

Figure 10 show and exploded view of the Joining and adjustable locking mechanism having a fixed screw (40) above referred, which is divided in two sections: "Section A" and "Section B", where the "Section A" is comprised by at least: a disk having spherical protuberances (26) similar to that of the magnetic joining and locking mechanism. (39) above referred, and by a fixed screw (41), where at least the head of said fixed screw (41) is firmly attached to the flat surface (20a) of said disk having spherical protuberances (26), of the side where its flange (20b) is projected: and "Part B" is comprised by at least: a disk having spherical cavities (27) similar to that of the magnetic joining and locking mechanism (39) above referred, an expansion spring (42), a square nut (43) and a square cover (44), wherein said square cover (44) is firmly attached to the flat surface (20a) of said disk having spherical cavities (27), of the side where its flange is projected (20b).

The fixed screw (41) above referred is firmly attached to the disk having spherical protuberances (26), in order to achieve that both components, behave as a single piece and rotate together with the member in which they are located.

The square housing (44) above referred is firmly attached to the disk having spherical cavities (27), in order to achieve that both components together with the expansion spring (42) and the square nut (43), behave as a single piece, and rotate together with the member in which they are located.

The manner of assembly of the joining and adjustable locking mechanism having a fixed screw (40) above referred, is in accordance with the order of the components of Figure 10, where the fixed screw (41) of the "Section A" passes through the central orifice (20c) of the disc having spherical cavities (27), trough the expansion spring (42) and through the square nut (43), until it passes through an orifice (44a) located on the closed face of the square cover (44), wherein, additionally, the fixed screw (41) is screwed in the square nut (43).
To assemble and adjust the joining and adjustable locking mechanism having a fixed screw (40), at least one of the members that contain it, has to be manually rotated, so that the fixed screw (41) can be screwed in the square nut (43); where it will be compressing or decompressing the expansion spring (42) accordingly, by the square nut (43) above referred, thus allowing to assemble and adjust the locking strength of said joining and adjustable locking mechanism having a fixed screw (40).

The joining points of the articulated mannequin in which the joining and adjustable locking mechanism having a fixed screw (40) can be installed, are difficult to access, i.e., the joining points which due to its form and arrangement do not allow to assemble or adjust the locking force of said locking mechanism (40), using a tool (not shown) from the outside of the cover of the articulated mannequin, as it can be seen from the joining and adjustable locking mechanism having a fixed screw (40) of Figure 19; wherein said mechanism (40) can be installed at the joining points 10, 12, 14, 17, 81 and 82, as seen in Figures 1 and 2; additionally it can also be installed on the joining points (15) located in the lower portion of the hip (4), in the same way as the joining points (10) located at the lateral sides of the upper torso (3).

One of the functions of the square cover (44) above referred, is to hold inside it, the expansion spring (42) and the square nut (43) above referred; furthermore, when the member of the articulated mannequin where the "Section B" is inserted is being manufactured, said square cover (44) will protect the components (42, 43) that are inside, preventing them from mixing with the material of said member.

Another function of the square cover (44) above referred, is to prevent that the square nut (43) rotate together with the fixed screw (41) as well as allow that said fixed screw (41) be able to move the square nut (43) on the inside of the square cover (44), thereby allowing that the square nut (43) be able to compresses or decompress the expansion spring (42), respectively increasing or decreasing the locking force of the Joining and adjustable locking mechanism having a fixed screw (40).

The orifice (44a) of the closed side of the square cover (44) above referred is optional, and when not present, said fixed screw (41) has to have a smaller length, so that, it only reaches the inner wall of the central portion of said square cover (44).

The square nut (43) and / or the square cover (44) above referred, can have a shape different from that of a square and a circle, so that the new cover prevents the new nut to rotate inside, as well as to allow the new nut to slide therein; with the purpose of having a larger number of alternatives and combinations of nuts and covers.

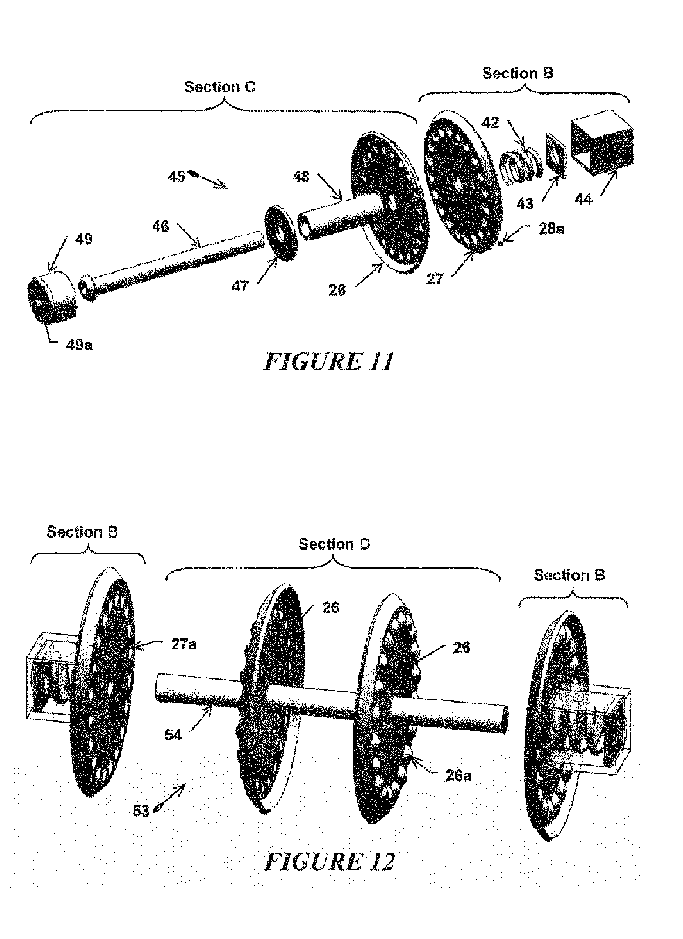

Figure 11 shows and exploded view of the joining and adjustable locking mechanisms having a movable screw. (45) above referred, which is divided in two sections: "Section B" and "Section C", where "Section B" is the same and works the same way as the "Section B" of the joining and adjustable locking mechanism having a fixed screw (40) above referred, and "Section C" is comprised by at least: a movable screw (46), a conventional washer (47), a tube (48), a disk having spherical protuberances (26) and a screw cover (49).

The manner of assembly of the joining and adjustable locking mechanisms having a movable screw (45) above referred, is in accordance with the order of the components of Figure 11, which is explained below: the movable screw (46) passes through the center of the conventional washer (47), trough the inside of the tube (48) and through the central orifice (20c) of the disk having spherical protuberances (26), it further passes through the center of the "Section B" in the same way as does the fixed screw (41) of the Joining and adjustable locking mechanism having a fixed screw (40) above referred; wherein an end of said tube (48) is placed on the flat surface (20a) of the disk having spherical protuberances (26), of the side where its flange (20b) is projected; and the conventional washer (47) is located at the opposite end of said tube (48), over which is located the head of the movable screw (46); wherein said tube (48) may be attached to the conventional washer (47) and / or to the disc having spherical protuberances (26); Furthermore, the screw cover (49) is directly attached to the conventional washer (47), so that the head of the movable screw (46) is trapped in the cavity (49b) of said screw cover (49), as it can be seen in the joining and adjustable locking mechanisms having a movable screw (45) of Figure 19.

To assemble and adjust the joining and adjustable locking mechanisms having a movable screw (45) above referred, firstly if has to be made a perforation on the cover of the member containing the head of the movable screw (46), wherein said cover may have a perforating guide (61), in order to allow to easily locate the location of the head of the movable screw (46), as seen in Figures 19 and 20; later, another perforation is made on the screw cover (49) above mentioned, which also can have a perforating guide (49a) concentrically located on its closed face, also in order to allow to easily locate the head of the movable screw (46), as seen in Figures 11 and 19; finally a tool (not shown) is inserted through said perforations until the head of said movable screw (46) is reached; thus achieving to freely rotate said movable screw (46), and compressing or decompressing the expansion spring (42) accordingly, by means of the square nut (43) above referred, thus achieving to assemble and adjust the pressure of the joining and adjustable locking mechanisms having a movable screw. (45).

The joining points of the articulated mannequin of the present invention in which the joining and adjustable locking mechanisms having a movable screw (45) can be installed, are accessible, i.e. those joining points which by its form and arrangement allow to assemble and adjust the locking force of said mechanism (45), by means of a tool (not shown) from the outside of the cover of the articulated mannequin as shown in the joining and adjustable locking mechanisms having a movable screw. (45) of Figure 19, wherein said mechanism (45) may be installed at the joining points: 10a, 11, 13, 16 and 18; as seen in Figures 1 and 2.
The primary purpose of the tube (48) of the joining and adjustable locking mechanisms having a movable screw (45) above referred, is to maintain the head of the movable screw (46) as close as possible to the outer surface of the member in which it is located, in such way that said movable screw (46) can be easily located and handled by using a tool (not shown) from the outside of said cover member; furthermore the tube (48) also help to keep the movable screw (46) aligned with the perforating guide (61) of the member where it is located.

One of the functions of the conventional washer (47) of the joining and adjustable locking mechanisms having a movable screw (45) above referred, is to prevent the head of the movable screw (46) to enter into the tube (48), and also to serve as a cover, so that the movable screw (46) in conjunction with the screw cover (49), be able to completely encapsulate the movable screw head (46), thereby preventing the head of the movable screw head (46) to be covered with the material of the member where it is located, while the member is being manufactured.

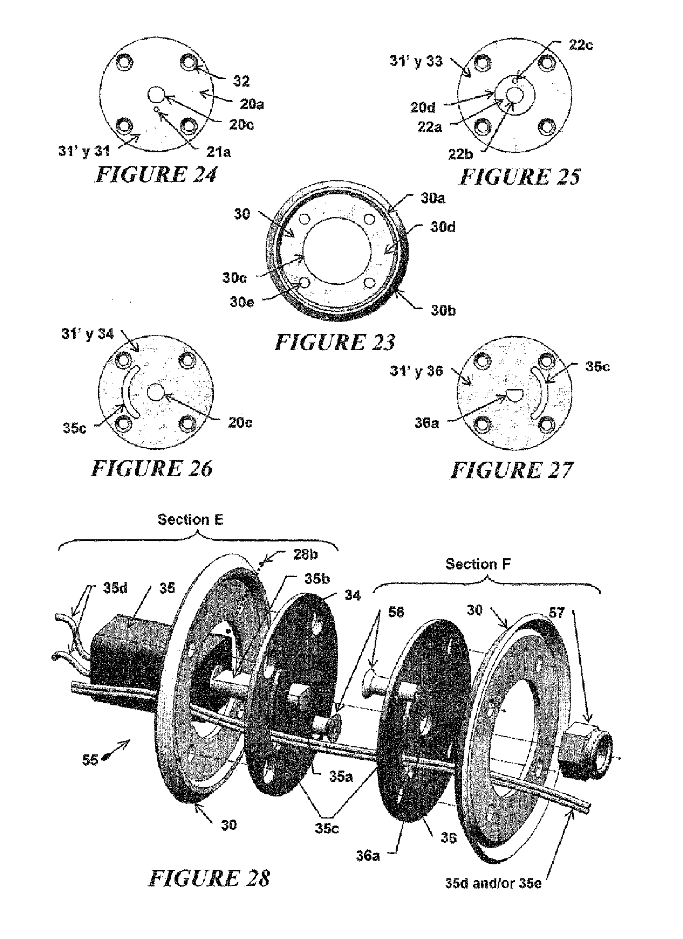

The square nut (43) of the joining and adjustable locking mechanism having a movable screw (45) above referred, can be replaced by a nut having a nylon insert (57), as seen in Figure 28; in order to achieve that the nylon insert can apply a constant pressure around the thread (not shown) of the movable screw (46), thus achieving that said ball screw (46) does not loosen the nut with nylon insert (57) with the movement of members, wherein said nylon nut (57) is also known as lock nut, which may have a different appearance and shape to that illustrated in Figure 28.

The joining and adjustable locking mechanism having a movable screw (45) above referred, may lack the tube (48) and the conventional washer (47); so that the screw cover (49) can be directly attached to the flat surface (20a) of the disk having spherical protuberances (26); thus, the head of the movable screw head (46) is encapsulated in the cavity (49b) of said screw cover (49), in order to achieve that the joining and adjustable locking mechanism having a movable screw. (45), can be comprised by a smaller number of components.

Figure 12 shows a partially assembled view of the Joining and double adjustable locking mechanism (53) above referred, which is divided in three sections: two "Sections B" and one "Section D", where the "Sections B" are the same and work the same way as the "Section B" of the joining and adjustable locking mechanism having a fixed screw (40) above referred, and "Section D" is comprised by at least: two disks having spherical protuberances (26) and a threaded rod (54), which passes through the central orifice (20c) of both disks having spherical protuberances (26), which is fixed to at least one of them, thereby preventing said threaded rod (54) to rotate together with the "Sections B", at the time in which they are rotating, where each end of said threaded rod (54), passes through the center of the "Sections B" above referred, in the same way as the fixed screw (41) of the joining and adjustable locking mechanism having a fixed screw (40) above referred.

The thread (not shown) of the threaded rod (54) above referred is of a single type of thread, either a right thread or a left thread; wherein an embodiment of said threaded rod (54) contains the two aforementioned types of thread, i.e. contains the right thread at one end and the left hand thread at the other end, so that when the two "Sections B" above referred are rotated to the same side, they simultaneously increase or decrease the blocking force as appropriate.

The joining points of the articulated mannequin in which the joining and double adjustable locking mechanism (53) can be installed, are found on the same member and have a collinear rotation axis of rotation, whereby said mechanism (53) may be installed on the joining points (15) located at the inferior portion of the hip (4), as seen in Figures 1 and 2; plus it can also be installed at two joining points (10) located on the lateral sides of the upper torso (3), in the same way as the joining points (15) of the hip (4) above referred. Since these joining points (10 and 15) are difficult to access in order to manipulate said mechanism (53) by a tool (not shown) from the exterior of the cover of the articulated mannequin to assemble and adjust the locking force of the members that contain the joining and double adjustable locking mechanism (53), the members containing the "Section B" will have to be manually rotated the, in the same way as the joining and adjustable locking mechanism having a fixed screw before mentioned is assembled and adjusted.

The main function of the joining and locking mechanisms mentioned above (39, 40, 45 and 53), is to ensure that the members of the articulated mannequin containing them, are locked in an assigned position, thereby achieving that the articulated mannequin may adopt or maintain any human posture.

One of the many advantages of the joining and locking mechanisms mentioned above (39, 40, 45 and 53), is that they allow that the position of the members of the articulated mannequin containing them, can be manually moved, without using any tool; for which it is enough to manually rotate them, thus achieving that said members are moved from a locking position to another; where these members will be locked in the desired position due to the force which will be exerting the expansion spring (42) or magnets (38) above referred, as appropriate.

One of the many advantages of being able to adjust the locking force of the joining and adjustable locking mechanisms (40, 45 and 53) above mentioned, is that it will ensure that the members of the articulated mannequin remain locked in a desired position, especially in the following cases: when members are holding objects such as a ball, a racket, a bag, a jacket, etc. and also to ensure that these members can be placed in any position without moving from that position over time, either by some vibration, by the position assigned to them or under their own weight.
The order in which the disks having spherical protuberances (26) and spherical cavities (27) in the joining and locking mechanisms (39, 40, 45 and 53) above referred have been described, can be reversed, i.e. the disk having spherical protuberances (26) may take the place of the respective disk having spherical cavities (27) and vice versa, because the order of said disks (26 and 27), do not affect at all the operation of the joining and locking mechanisms (39, 40, 45 and 53) mentioned above.

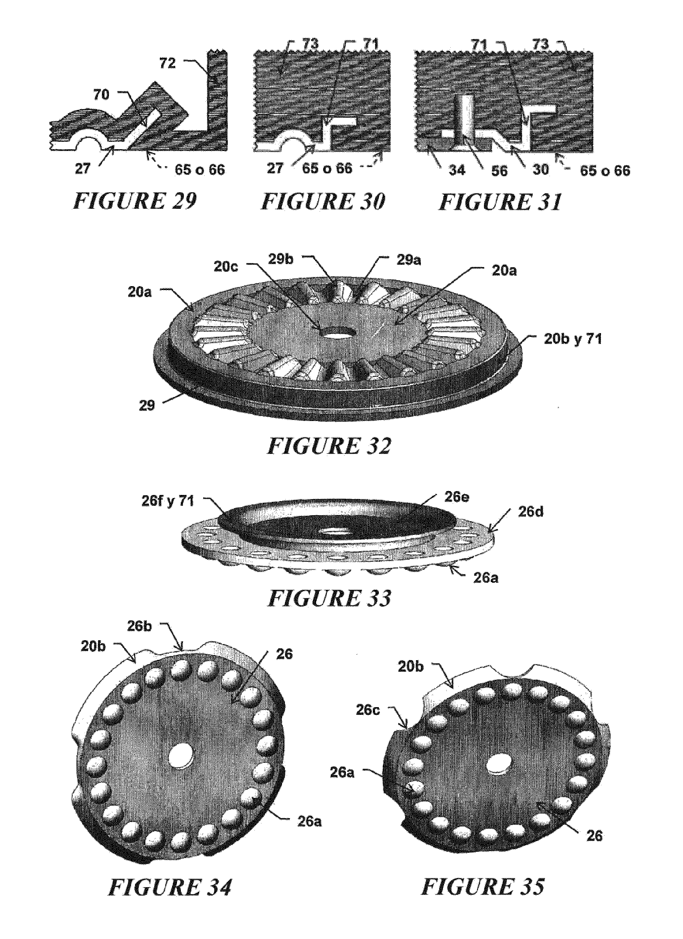

A variant of the joining and locking mechanisms (39, 40, 45 and 53) above mentioned, is that both its disk having spherical protrusions (26), and its disk having spherical cavities (27), can be replaced by a disk having radial slots (29), as illustrated in Figure 32, in order to have a choice of locking disks (26, 27 and 29); wherein said disk having radial slots (29) is similar to the smooth disk (20) of the magnetic coupling mechanism (37) above, with the difference that also comprises several concave radial slots (29a) and convex (29b) equidistantly located over its flat surface (20a) and around the central orifice (20c), providing a locking effect similar to that of the disk having spherical protuberances (26) and with spherical cavities (27).

The shape, length and appearance of the concave radial slots (29a) and convex (29b) above mentioned and illustrated in the disk having radial slots (29) of Figure 32, should not be considered as limiting to the present invention, since they are illustrated only by way of example.

The spherical protuberances (26a), the spherical cavities (27a) and the concave radial slots (29a) and convex (29b) above referred, are elements that cause the locking of the joining and locking mechanisms (39, 40, 45 and 53) mentioned above.

A variant of the locking elements (26a, 27a, 29a and 29b) above mentioned, is that they can be replaced by other locking elements having a different shape (not shown) so that the new locking elements, allow their respective disks to concentrically rotate one above the other, additionally they also ensure that their respective disks are blocked in different positions in order that the locking mechanisms have more choices of locking discs.

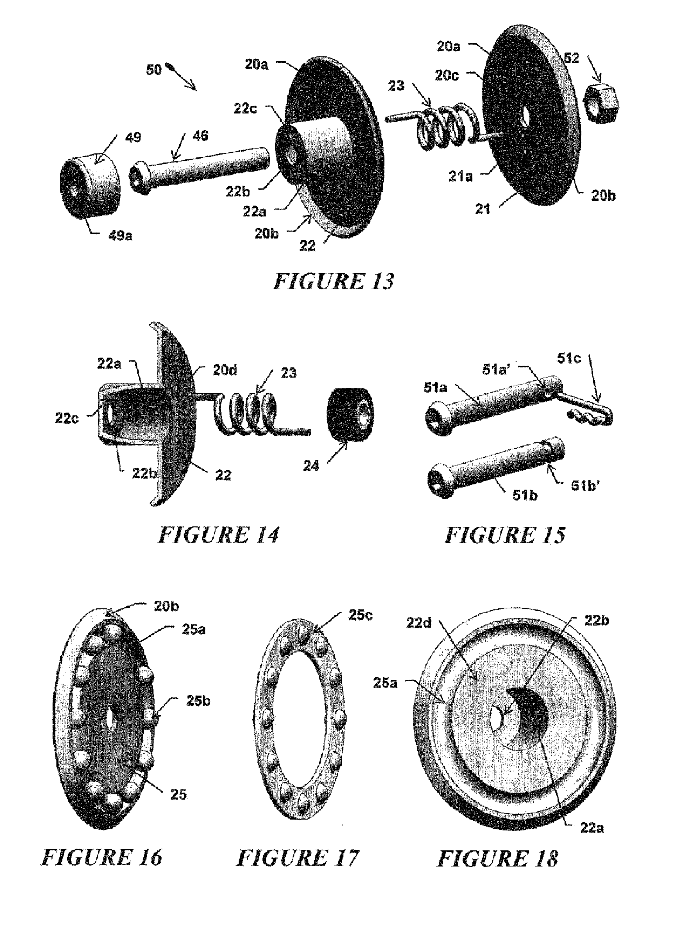

Figure 13 shows an exploded view of the adjustable joining and torsion mechanism (50) above referred, which is comprised by at least: a screw cover (49), a movable screw (46), a disk having a compartment (22), a torsion spring (23), a disk having an adjacent orifice (21) and a conventional nut (52), wherein said disk having an adjacent orifice (21) is similar to the smooth disks (20) of the magnetic coupling mechanism (37) above mentioned, with the difference that comprises at least one adjacent orifice (21 a) located near its central orifice (20c), through which an end of said torsion spring (23) passes, and also the disk having a compartment (22) is similar to the smooth disks (20) of the magnetic joining mechanism (37) above mentioned, with the difference that its central orifice (20d) has a diameter such that it allows the passage of the torsion spring (23) above referred, as shown in Figure 14, furthermore, said disc having a compartment (22) also comprises a cylindrical chamber (22a) concentrically located over its central opening (20d), of the side where its flange is projected (20b), wherein said cylindrical chamber (22a) houses the torsion spring (23) above referred in its interior. It further comprises a central orifice (22b) located on its surface.

A variant of the disk having a compartment (22) above referred, is that the cylindrical compartment (22a), besides having a central hole (22b) located on its surface, also has an adjacent hole (22c) near said central orifice (22b), in order that through said adjacent orifice (22c) be able to pass one end of the torsion spring (23) above referred.

The disks having an adjacent orifice (21) and compartment (22) above referred, may have more than one adjacent orifice (21 a and 22c) around its central hole (20c or 22b) in order that the torsion spring (23) mentioned above can be located in different positions, thus achieving the capability to adjust the torque of the adjustable joining and torsion mechanism (50) above referred.

The screw cover (49) of the adjustable joining and torsion mechanism (50) above referred, has the same purpose and operates in the same way that the screw cover (49) of the joining and adjustable locking mechanisms having a movable screw. (45) above referred, with the difference that instead of being attached to a conventional washer (47), it is joined to the flat surface of the cylindrical compartment (22a) of the disc compartment (22) above mentioned.

The manner of assembly of the adjustable joining and torsion mechanism (50) above referred, is in accordance with the order of the components of Figure 13, which is explained below: the movable screw (46) passes through the central hole (22b) of the cylindrical compartment (22a) of the disk compartment (22), wherein the head of said movable screw (46) is placed over the flat surface of said cylindrical compartment (22a); and thereafter the screw cover (49) is placed and fixed over the flat surface of said cylindrical compartment (22a), thereby achieving that the head of the movable head of said screw (46) be trapped in the cavity (49b) of said screw cover (49), in the same way as the screw cover (49) of Figure 19; thereafter, the torsion spring (23) is inserted in the cavity of said cylindrical compartment (22a) so that one of its ends is inserted in the adjacent orifice (22c) of said cylindrical chamber (22a); also the opposite end of said torsion spring (23) is inserted in the adjacent orifice (21a) of the disk having an adjacent the orifice (21), wherein the movable screw (46) also passes through the center of the torsion spring (23) and through the central orifice (20c) of the disk having an adjacent orifice (21), until it is screwed into the conventional nut (52), which is concentrically located on the flat surface (20a) of the disk having an adjacent orifice (21), of the side where its flange is projected (20b). Such conventional nut (52), should preferably be joined to the flat surface (20a) of the disk having an adjacent orifice (21), to prevent that the conventional nut (52) rotates together with the movable screw (46).

To assemble the adjustable joining and torsion mechanism (50) above mentioned, it is used the same assembly technique as the one of the joining and adjustable locking mechanisms having a movable screw (45) above referred.

One advantage of the adjustable joining and torsion mechanism (50) above, is that when a manual force is applied over the members that contain it or when such members interact with a moving object (not shown), said members will rotate about the rotating axis of said mechanism (50), and when the force that caused them to rotate ceases, those members automatically recede to its original position assigned by the torsion force of the torsion spring (23).

One of the many applications of the adjustable joining and torsion mechanism (50), is that it can do the functions of a shock absorber or a suspension mechanism (not shown) in each member of the articulated mannequin that contains it.

The disk having a compartment (22) of the adjustable joining and torsion mechanism (50) above referred, can take the place of its disk having an adjacent orifice (21) and vice versa; so its conventional nut (52) will be located on the flat surface of the cylindrical compartment (22a) of its disc having a compartment (22); furthermore, the head of its mobile screw (46) and of its screw cover (49), will now be concentrically located on the flat surface (20a) of the disk having an adjacent orifice (21), of the side where its tab is projected (20b); wherein the cover screw (49) is joined to the disk having an adjacent orifice (21), thus achieving that the head of the movable screw (46) be trapped in the cavity (49b) of said screw cover (49), in order that the adjustable joining and torsion mechanism (50) may have a different arrangement of components.

The conventional nut (52) above referred, can be replaced by a thread (not illustrated) located in the central orifice (20c or 22b) of the disk to which it belongs; in order to reduce the amount of components of the assembly mechanisms that contain it.

The conventional nut (52) above referred, can also be replaced by a nut having a nylon insert, (57), as the one seen in Figure 28, in order that the nylon insert exerts a constant pressure around the thread (not shown) of the movable screw (46), achieving in this way that said movable screw (46) does not come loose from the nut having a nylon insert (57) due to the movement of the members.

The cylindrical compartment of the disk having a compartment (22) above referred, can not be part of the same piece of said disc having a compartment (22), and it can be an additional component concentrically attached over its flat surface (20a) around its central orifice (20d) in order that said disk having a compartment (22) can be manufactured using another process.

The joining and simple free movement mechanism (not shown) mentioned above, is similar and is assembled similarly to the Adjustable joining and torsion mechanism (50) above referred and illustrated in Figure 13, with the difference that both the disc having a compartment (22), and the disk having an adjacent orifice (21), are replaced by two smooth discs (20), which are similar to the ones of the Magnetic joining mechanism (37) above referred, in addition that the torsion spring (23) above is absent, thus achieving that said smooth discs (20) can rotate freely on the movable screw (46).

The main function of the joining and simple free movement mechanism is to allow that the members of the articulated mannequin of the present invention containing it, can move freely with the fewest possible components.

The joining and simple free movement mechanism for working with radial loads (not shown) mentioned above, is similar and is assembled similarly to the adjustable joining and torsion mechanism (50) above referred and illustrated in Figure 13, with the difference that the torsion spring (23) is replaced with a radial load bearing (24), as illustrated in Figure 14; also the disk having an adjacent orifice (21), is replaced by a flat disk (20) similar to that of the magnetic coupling mechanism (37) above mentioned; additionally, the central bore (20d) and the cylindrical compartment (22a) of the disk having a compartment (22) has such a diameter, that allows the passage of said radial load bearing (24), so that said radial load bearing (24) can be housed in said cylindrical compartment (22a).

The main function of the joining and simple free movement mechanism for working with radial loads is to allow that the members of the current articulated mannequin containing it, can move freely and efficiently with radial loads.

The joining and simple free movement mechanism for working with axial loads (not shown) mentioned above, is similar and is assembled similarly to the Adjustable joining and torsion mechanism (50) above referred and illustrated in Figure 13, with the difference that both the disk compartment (22), and the disk having an adjacent orifice (21), are replaced by a slotted disk (25), similar to the one illustrated in Figure 16; wherein said slotted disks (25) are similar to the smooth disks (20) of the magnetic joining mechanism (37) above referred, with the difference that they comprise a peripheral circular slot (25a) located on its flat surface (20a), where several small bullets (25b) are placed; in which case, the torsion spring (23) is not required.

The main function of the joining and simple free movement mechanism for working with axial loads is to allow the members of the articulated mannequin containing it to move freely and efficiently with axial loads.

The joining and simple free movement mechanism for working with radial and axial loads (not shown) mentioned above, is similar and is assembled similarly to the joining and simple free movement mechanism for working with axial loads above mentioned, with the difference that one of the slotted discs (25) is replaced with a slotted disc having a compartment (22d), as illustrated in Figure 18; wherein said slotted disc having a compartment (22d) is similar to the slotted disc (25) above referred, with the difference that it further comprises, a cylindrical compartment (22a) concentrically located concentrically over its flat surface (20a), in the same way as the cylindrical compartment (22a) of the joining and simple free movement mechanism for working with radial loads above mentioned, besides that a radial load bearing (24) as mentioned above, is concentrically located within said cylindrical compartment (22a); also considering that several small bullets (25b) are located inside the peripheral circular slot (25a) of both discs.

The main function of the joining and simple free movement mechanism for working with radial and axial loads is to allow the members of the articulated mannequin of the present invention containing it to move freely and efficiently with radial and axial loads.

The small bullets above referred (25b), can be replaced with an axial load bearing (25c), as illustrated in Figure 17, in order that the bullets are kept ordered and equidistant between them and thereof, as well as be able to manipulate them in one piece.

One of the many applications of the joining and simple free movement mechanisms mentioned above is that the members containing them may rotate freely about the axis of rotation of said mechanisms, thereby allowing that said members can interact with an object (not shown) that is in motion, thereby achieving that these members can move together with said object without exerting any resistance, where the object may be: an automatic door or the pedals of a bicycle, to name a few.

Both the adjustable joining and torsion mechanisms (50), and the joining and simple free movement mechanisms mentioned above, shall be installed in the same joining points (10a, 11, 13, 16 and 18) that the joining and adjustable locking mechanisms having a movable screw (45) above referred, by the fact of having a movable screw (46) to be assembled, in order to manipulate the movable screw (46) from outside the cover of the members of the articulated mannequin of the present invention.
For cases in which the adjustable joining and torsion mechanism (50) and the joining and simple free movement mechanisms above referred are required to be installed at the other joining points (10, 12, 14, 15, 17, 81 and 82) of the articulated mannequin, it will be necessary to replace its mobile screw (46) with a perforated screw (51 a) or slotted (51 b), as illustrated in Figure 15, where the perforation (51a) of said perforated screw (51a) is transverse to its cylindrical surface and the slot (51 b') of said slotted screw (51 b) is concentric and located around its cylindrical surface, also in this case, said perforated screw (51 a) or slotted (51 b) may lack a thread, since the conventional nut (52) will also be replaced by a lock (51 c), as the one illustrated in Figure 15.

To assemble the adjustable joining and torsion mechanism (50) and the adjustable joining and torsion mechanism having a perforated screw (51a) or slot (5b) above referred, it will have to be inserted the lock (51 c) above referred through the perforation (51a') of the perforated screw (51a), or it will be necessary to insert secure said lock (51c) around the groove (51b') of the slotted screw (51 b), as appropriate.

Another method for installing the joining and simple free movement mechanisms above referred in the joining points that are difficult to access for an external tool (not shown), where said joining points (10, 12, 14, 15, 17, 81 and 82) are the same as those of the joining and adjustable locking mechanism having a fixed screw (40) above, is that the movable screw (46) comprise a fixed screw (41), so that the head of said fixed screw (41) is firmly bonded to the surface of its respective disk, in addition that in such case the screw cover (49) is not required.

To assemble the joining and simple free movement mechanisms having a fixed screw (41) above, it is used the same assembly technique of the joining and adjustable locking mechanism having a fixed screw (40) above referred.

Figure 19 illustrates a lateral view of two hemispherical connecting pieces (1) and a complementary piece (60), which are observed partially assembled and having its transparent cover for displaying the assembly mechanisms that are inside them; where said complementary piece (60) can be any member of the articulated mannequin or an accessory (not shown), for example a hook, a telephone base, a TV base, a cup holder, etc.

Based on the foregoing, it will be apparent that the assembly mechanism of the present invention can assemble: similar members, as is the case of the two hemispherical connecting pieces (1) illustrated in Figures 19 and 20; different members as is the case of the hemispherical connecting piece (1) and biceps (5a) illustrated in Figure 21; members with complementary pieces (60), such as hemispherical connection piece (1) and the complementary piece (60) of Figure 19, and it can also assemble complementary pieces (60) between them.
Figure 19 is an example of how the mechanisms above mentioned, are inserted the above mechanisms, which shows: a joining and adjustable locking mechanism having a fixed screw (40) in vertical position, which assembles a first hemispherical connecting piece (1) with a complementary piece (60), a joining and adjustable locking mechanisms having a movable screw (45) in a horizontally position, which assembles said hemispherical connecting piece (1) with a second hemispherical connecting piece (1); and joins the "Section A" of a joining and adjustable locking mechanism having a fixed screw (40) in vertical position, located at the other end of the second hemispherical connecting piece (1).

Figure 20 is a perspective view of the two hemispherical connecting pieces (1) above referred and illustrated in Figure 19, which shows their appearance as seen from the outside, and how they are inserted between the material of the members, the "Section C" of the joining and adjustable locking mechanisms having a movable screw (45), as well as the "Section A" of the joining and adjustable locking mechanism having a fixed screw (40).

A variant of the circular flat surface (65) and of the partially circular flat surface (66) of the members mentioned above, comprises in that said flat surfaces (65 and 66) rather than being entirely flat, they have the shape that is viewed from the outside of the assembly mechanisms mentioned above, when they are inserted in the members, such as the biceps (5a) illustrated in Figure 22, which shows a central orifice (68) in each of its flat surfaces (65 and 66), besides that they also comprise several spherical protuberances (26a) located around said central orifice (68) over its partially circular flat surface (66) and also comprises several spherical cavities (27a) located around said central orifice (68) over its flat circular surface (65), in order that some of the components of said assembly mechanisms, be integrated into the material of said members, thus achieving the simplification of these assembly mechanisms.

The disks mentioned above, such as: the smooth disk (20), the disk having an adjacent orifice (21), the disc having a compartment (22), the slotted disc (25), the slotted disc having a compartment (22d), the disc having spherical protrusions (26), the disc having spherical cavities (27) and the disc having radial grooves (29) are part of a group called "simple disks".

The mechanisms of the composite disks aforementioned, are comprised by at least: an insertion base (30), as seen in Figure 23, a coupling disc (31'), such as coupling discs (31, 33, 34 and 36) which are seen in Figures 24 to 27, and several screws having a conical head (56), as seen in Figure 28, where said composite disks may replace the simple disks aforementioned, achieving at least the same results, benefits, applications and features, in addition to the fact that they are composite, they also may maintain, exchange and replace said mechanisms of composite disks.

The coupling discs (31') of the aforementioned composite disks are similar to the simple discs and to their variants mentioned above, with the difference that they do not have any flange (20b), and that they have multiple conical orifices (32) equidistant to each other, located around its central orifice (20c and 20d) in its flat surface (20a), as shown in Figures 24 to 28, wherein said conical orifices (32) are designed to allow the pass of said screws having a conical head (56) through them, as shown in Figure 28, besides the fact that for being conical, they form a conical cavity, where the head of said conical head screws (56) is housed; thus achieving that said screws having a conical head (56) do not protrude over their respective coupling discs (31') as well as avoiding any collision between the screws having a conical head (56) and the two coupling discs (31') of a same mechanisms of composite disks.

Figures 24 and 25 show a coupling disc having an adjacent orifice (31) and a coupling disk having a compartment (33) respectively, where the differences may be appreciated, in relation to the disk having an adjacent orifice (21) and to the disk having a compartment (22) respectively, of the adjustable joining and torsion mechanism (50) above.

Figure 26 show a smooth coupling disc (34), where it will also the differences may be appreciated, in relation to the smooth disk (20) of the magnetic joining mechanism (37) above.

Figure 27 show a coupling disc having a central orifice guide (36), which is similar to the smooth coupling disc (34) above referred, with the difference that the geometrical shape of its central perforation (36a) is different from that of a circle, i.e. it can have at least, the shape of capitalized letter "D", which serves as a guide for the introduction of the axle (35a) of a motor (35), as that seen in Figure 28, where said axle (35a) of the motor (35) must have at least the same geometric shape of the central orifice (36a) of the coupling disc having a central guide orifice (36); by which for this case, said axle (35a) of the motor (35) has at least one flat surface (35b) located along its cylindrical surface, thus achieving that said axle (35a) also have the shape of a capitalized letter "D".

Both the shaft (35a) of the motor (35), and the threaded rod (54), the fixed screws (41), the perforated screws (51a) and the slotted screws (51 b) above mentioned, have a variant, which comprises that at least a section of its cylindrical surface is not completely cylindrical, in order that they can be conjugated with disks whose central orifices, do not have the geometric form of a circle.

The insertion base (30) of the mechanisms of composite disks aforementioned, is comprised by at least: a flat surface (30a) comprised by a peripheral flange (30b) projected with a certain angle to one of its sides, in addition to which, said flat surface (30a) further comprises a conical or cylindrical cavity (30d), which is concentrically located to the side where its flange (30b) is projected, wherein said conical or cylindrical cavity (30d) has on its flat surface a central orifice (30c) of equal or larger diameter than the central orifice (20c, 20d or 36a) of the coupling disks (31') above mentioned, besides said conical or cylindrical cavity (30d) also comprises in its flat surface, threaded holes (30e) aligned with the conical holes (32) of said coupling disc (31') which are intended to receive the screws having a conical head above referred, as shown in Figures 23 and 28, wherein said flat surface (30a) is exposed and aligned with the flat surface (65 or 66) of the member in which it is located, additionally, said flange (30b) is submerged between the material of said member, similarly as the locking discs (26 and 27) that are illustrated in Figure 19.

The purpose that the insertion base (30) above referred, contains a conical or cylindrical cavity (30d), is to allow the coupling discs (31') mentioned above to be housed inside it, in such way that at most, the exterior flat surface (20a) of said coupling disks (31'), aligns with the flat surface (30a) of said insertion base (30), thereby achieving that also said exterior flat surface (20a) of the coupling disks (31'), be exposed, and at most that it aligns with the flat surface (65 or 66) of the member in which it is located.

The central orifice (30c) of the insertion base (30) above referred, is intended to allow diverse objects and/or devices to be inserted through it, into the members of the articulated mannequin, such as: the compartment (22a) of the coupling disk having (33), motors (35), pistons, sensors, fans, and / or any other mechanical, electrical, electronic, pneumatic and / or hydraulic device (not shown) in conjunction with its cables and / or hoses (35d and 35e) as appropriate, as shown in Figure 28.

The flange (20b, 30b) of the simple discs and of the insertion base (30) above mentioned, provides the assembly mechanisms of the present invention, with a platform that is firmly inserted between the material of the members of the articulated mannequin of the present invention, preventing these mechanisms from moving from its assigned place, loosen and / or detach with the passage of time and / or by the normal use of the member in which they are located.

The insertion base (30) above referred may comprise a slotted insertion base (not shown) which is comprised by a peripheral circular slot (25a) which contains therein several small bullets (25b) in its interior or an axial load bearing (25c) above referred, similarly to the slotted disk (25) above referred and illustrated in Figure 16, in order that composite disks mechanisms can work efficiently with axial loads, wherein said peripheral circular slot (25a) is located on its flat surface (30a), so that in this case, the area of its flat surface (30a) will be greater, so that it can contain said peripheral circular slot (25a).

Another variant of the insertion base (30) before mentioned, comprise a flat insertion base is flat insert (not shown) which lacks the conical or cylindrical cavity (30d), so that the area of its flat surface (30a) is higher, additionally, the central orifice (30c) and threaded orifices (30e) are located on said flat surface (30a), similarly as the central orifice (20c) and the adjacent orifice (21 a) of the disk having an adjacent orifice (21) above referred and illustrated in Figure 13, so that the insertion base of the composite disks mechanisms is less complex.

A variant of the flat insertion base above mentioned, comprise a flat and slotted insertion base (not shown) which in addition of having the central orifice (30c) and the threaded holes (30e) on its flat surface (30a) above, also comprises a peripheral circular slot (25a) which contains several small bullets (25b) or an axial load bearing (25c) above mentioned, in order to achieve that the composite disks mechanisms be able to efficiently work with axial loads, with an insertion base that is less complex than the aforementioned slotted insertion bases.

Coupling discs (31, 33, 34 or 36) above referred, are just some examples of the coupling discs (31') that can be assembled with the insertion bases above referred. In order to avoid saturating the current invention, there will only be mentioned some examples of the elements which may be contained by the other coupling disks (not shown), wherein said elements can be: spherical protuberances (26a), spherical cavities (27a), a peripheral circular slot (25a) and / or several concave radial slots (29a) and convex (29b) as above mentioned.

A variant of the simple disks and of the coupling discs (31') above referred, comprise at least one partially circular slot (35c) which is concentric with its central orifice (20c, 20d or 36a) and passes through it, such as the one seen in the smooth coupling disks (34) and with central guide orifice (36) illustrated in Figures 26 and 27; in order that through said partially circular slot (35c) they can be passed, at least thin objects such as cables (35d) of the motor (35) above referred, as well as the cables and / or hoses (35e) of pistons, sensors, fans or any other electrical, mechanical, pneumatic and / or hydraulic device (not shown), as required, and as shown in Figure 28, where said cables and / or hoses (35d and 35e) are connected to at least one power source, to a compressor and / or a pump (not shown) as appropriate.

The partially circular grooves (35c) above mentioned have an opening angle of at least 95°, by which it can be achieved that the members that have an inserted mechanism having a movable screw (46) above referred, can be rotated up to 180° without the wires and / or hoses (35d and 35e) above referred causing any interference with their rotary movements.

A variant of the mechanisms having a threaded rod (54), a fixed screw (41), a perforated screw (51 a) or a slotted screw (51 b) above mentioned, is that the threaded rod (54), its fixed screw(41), its perforated screw (51 a) or its slotted screw (51 b), be substituted by at least one hollow rod or by a hollow screw (not shown) as appropriate, wherein said hollow element, is also cylindrical and concentric with the cylindrical surface of said hollow rod or hollow screw, in order that said members that have said mechanisms inserted, allow the pass of thin objects such as cables and/or hoses (35d and 35e) before mentioned, through said hollow rod or hollow screw, without interfering with their rotary movement.

Thanks to the partly circular slots (35c), to the hollow rod and to the hollow bolt, before mentioned, it is ensured that all members of the articulated mannequin current can have at least: a motor (35), a piston sensor, fan and / or any other mechanical, electrical, electronic, pneumatic and / or hydraulic device (not shown).

In Figure 28 it is shown an exploded view of the joining and automated movement mechanism (55) above referred, which is illustrated by way of example, to show the manner of assembly and the way that the composite disk mechanisms can interact before mentioned, with the other elements around them; wherein said joining and automated movement mechanism (55) is divided into two sections: "Section E" and "Section F", where "Section E" comprises at least: an insertion base (30), a smooth coupling disk (34), several screws having a conical head (56) and a motor (35); and "Section F" comprises at least: an insertion base (30), a coupling disk having a central guide orifice (36), several screws having a conical head (56) and a nut having a nylon insert (57), where it can also be appreciated that such coupling discs (34 and 36) comprise the partially circular slot (35c) above referred.

The manner of assembly of the "Sections E and F" of the joining and automated movement mechanism (55) above referred, is in accordance with the order of the components of Figure 28, which are explained below: in the "Section E" the motor (35) is directly attached to the interior flat surface (20a) of the smooth coupling disk (34), where its shaft (35a) passes through the central orifice (20c) of said smooth coupling disk (34), and can rotate freely around it; the wires (35d) of the motor (35) are inserted through the central orifice (30c) of its respective insertion base (30), in order to subsequently assemble the smooth coupling disk (34) together with its motor (35), with its respective insertion base (30), by means of the screws having a conical head (56) above referred, which pass through the conical orifices (32) of said smooth coupling disc (34) until they are screwed into the threaded holes (30e) of its respective insertion base (30), in this way, the motor (35) is located inside the member in which it is located. In "Section F" the coupling disk having a central guide orifice (36) is firmly assembled to its respective insertion base (30), by means of a screw having a conical head (56) above referred, which passes through the conical orifices (32) of said coupling disk having a central guide orifice (36), until it is screwed into the threaded holes (30e) of its respective insertion base (30).

Before assembling the "Sections E" with the "Section F" of the joining and automated movement mechanism (55) above referred, when it is required that a cable and / or hose (35d and / or 35e) pass from one member to another through the aforementioned assembly mechanisms, it is preferable that they firstly pass through the hollow rod or through the hollow screw above referred, or through the partially circular slot (35c) of each coupling disc (31') above referred, as appropriate, and as shown in Figure 28.

To assemble the "Sections E" with the "Section F" of the joining and automated movement mechanism (55) above referred, it is necessary to firstly insert the shaft (35a) of the motor (35) in the "Section F", by matching the flat surface (35b) above referred of said axle (35a), with the flat face of the letter "D" of the central orifice (36a) of the coupling disk having a central guide orifice (36) above referred, so that finally the axle (35a) is screwed into the nut having a nylon insert (57) above referred, considering that the axle (35a) comprises a thread in at least a part of its cylindrical section.

The purpose that the shaft (35a) of the motor (35) and the central orifice (36a) of the Coupling disk have a central guide orifice (36), have a shape other than a circle, is to avoid that said shaft (35a) does not rotate within the central orifice (36a) of said disk, i.e. that it can rotate together with said disk.

The nut having a nylon insert (57) above referred, ensures that the "Sections E and F" of the joining and automated movement mechanism (55) above referred, do not loose or tighten while the axle (35a) of the motor (35) is rotating, because the nylon of said nut (57) maintain a constant pressure around the axle (35a) of the motor (35), preventing that the nut having a nylon insert (57) from turning and loosening.
In cases where the assembly mechanisms of the articulated mannequin have a nut that is not fixed, such as in the case of joining and automated movement mechanism (55) above referred, said assembly mechanism should be installed in the same joining points (10a, 11, 13, 16 and 18) as the ones of the joining and adjustable locking mechanisms having a movable screw (45) above referred, so that it is possible to manipulate said nut from the outside of the cover of the members of the articulated mannequin of the present invention.

A variant of the axle (35a) of the motor (35) above referred, comprise a perforated or slotted shaft (not shown), which has a perforation transversally located with respect to its cylindrical surface, or a circular slot (not shown) around its cylindrical surface of having a thread on its cylindrical surface, as appropriate, instead of having a thread on its cylindrical surface, similarly as the perforated screw (51 a) and the slotted screw (51 b) respectively shown in Figure 15; wherein the nut having a nylon insert (57) above, is replaced by a lock (51 c) such as the one illustrated in Figure 15, which is inserted into said perforated or slotted axle in the same manner in which it is inserted in said perforated screws (51a) and slotted screw (51 b); in order to be able to assemble the joining and automated movement mechanism (55) in a different and more secure way, as well as to install it and assemble it at the joining points (10, 12, 14, 15, 17, 81 and 82) of the articulated mannequin that are inaccessible to an external tool (not shown) above.

A variation of the geometrical shape of the conical holes (32) and the head of the screws having a conical head (56), comprise a shape that is different from that of a cone, in order that they can be used different types of screws.

In other embodiment of the "Section F" of the joining and automated movement mechanism (55) above, the insertion (30), of the coupling disk having a central guide orifice (36) and the screws having a conical head (56) are replaced by a disk having a central guide orifice (not shown) in order to achieve that the "Section F" have a smaller number of components; wherein said disk having a central guide orifice is similar to the smooth disk (20) of the magnetic joining mechanism (37) above mentioned, with the difference that its central orifice (36a) is similar to the coupling disk having a central guide orifice (36), as seen in Figures 27 and 28, in addition that said disk having a center guide orifice may also have a partially circular slot (35b) as that of the coupling disk having a central guide orifice (36), wherein said may also have a partially circular slot (35b) as that of the coupling disk having a central guide orifice also forms part of the group called "simple disk".

In other embodiments of the joining and automated movement mechanism (55) above referred, its two insertion bases (30) are replaced by two slotted insertion bases, by two flat and slotted insertion bases, or a combination of both, so that said joining and automated movement mechanism (55) can operate more efficiently and with little friction as possible, avoiding overheating; because both the slotted insertion base, and the flat and slotted insertion base are designed to withstand axial loads, because they can contain multiple small pellets (25b) or an axial load bearing (25c) within its peripheral circular slot (25a).

Both simple disks, and coupling disks (31'), can have attached to its flat surface (20a), of the side that remains inside the member in which are located, at least one device: mechanical, electrical, electronic, pneumatic and / or hydraulic similar to the motor (35) illustrated in Figure 28.

One of the many applications of the joining and automated movement mechanism (55) above referred, comprises that it allows that the members containing it, can perform automated movements, thereby achieving that the articulated mannequin can perform moves such as salutation, turn the head (2) and / or kick a ball, to name a few.

An example of the way in which the composite disks above mentioned may replace the simple disks above mentioned, comprises the adjustable joining and torsion mechanism (50) above referred and illustrated in Figure 13, where its disk having an adjacent orifice (21) is replaced by an insertion base (30), several screws having a conical head (56) and a coupling disk having an adjacent orifice (31), such as those illustrated in Figures 23 and 24, additionally, its disk having a compartment (22) is replaced by another insertion base (30), several screws having a conical head (56) and a coupling disk having a compartment (33), such as the ones illustrated in Figures 23 and 25, similarly as the way that the composite disks of the joining and automated movement mechanism (55) are assembled which are shown in Figure 28, thus forming a mechanism comprised by torsion composite disks (not shown), wherein if its torsion spring (23) is substituted by one radial load bearing (24), as illustrated in Figure 14, it is obtained a joining and free movement composite disks mechanism for working with radial loads (not illustrated).

The shape and appearance of the insertion bases, of the coupling disks, of the simple disks and of the other components of the assembly mechanisms of the articulated mannequin are only mentioned and illustrated only by way of example and should not be considered as limiting for the present invention.

In other embodiments of the above assembly mechanisms, the various components and variants of assembly mechanisms can be combined with other assembly mechanisms, in order to obtain different assembly mechanisms, for example: if the two smooth disks (20) of the magnetic joining mechanism (37) above referred and illustrated in Figure 7, are replaced by two slotted discs (25) together with an axial load bearing (25c) before mentioned and illustrated in Figures 16 and 17, it is obtained an assembly mechanism that corresponds to a magnetic joining mechanism that efficiently supports axial loads (not illustrated).

Figures 29 and 30 show by way of example, the front view of the cross section (28a) of the disk having spherical cavities (27) above referred and illustrated in Figure 11; also, in Figure 31 is shown, as an example, the front view of the cross section (28b) of a composite disk above mentioned and shown in Figure 28; where there are shown two different types of flanges (70 and 71) that the simple disks may have and the insertion bases before mentioned, where a flange is diagonal (70) and the other is of a type "Z" (71); also there are shown two different types of material distribution that may have the members of the articulated mannequin of the present invention where such members may be hollow (72) or solid (73).

Figures 29, 30 and 31 also show as an example the manner in which the material of the hollow members (72) and solid members (73) above referred, cover the simple disks and the composite disks above mentioned; additionally, said hollow members (72) and solid members (73) may be rigid or flexible, wherein is preferable that they are rigid and hollow or flexible and solid, to ensure that its weight be light without such members flexing under its own weight ; wherein said material may be plastic, fiberglass, resin, polyurethane, cardboard or any other combination of materials, compounds and / or substances, in such way that upon mixing, they can maintain the shape of the mold interior (not shown) that will form the members of the articulated mannequin.

The hollow members (72) have a material distribution similar as the one observed in Figure 29, i.e., that will form a layer of material over the aforementioned assembly mechanisms and over the inner walls of the molds (not illustrated) that will form said members; unlike solid members (73), which have a material distribution similar as the one observed in Figures 30 and 31, i.e. the material will fill everything that is inside said molds, which will form the members of the articulated mannequin.

The flange (20b, 30b) which has been previously shown in the simple disks and in the insertion bases mentioned above, is the diagonal tab (70) illustrated in Figure 29.

Other embodiments of the diagonal tab (70) above referred, comprise a flange type "Z" (71) illustrated in Figures 30 to 33, which is different from said diagonal flange (70), because its shape is similar to that of the letter "Z" instead of a diagonal, with the purpose that the simple disks and insertion bases mentioned above, are inserted with more precision between the material of the members (72 and 73) of the articulated mannequin, being the type tab " Z "(71) more reliable that the diagonal tab (70) above referred, because its shape can be better trapped between the material of said members (72 and 73), thereby preventing the simple disks and / or insertion bases mentioned above, to detach from such members due to the movement and the weight of said members, as well as over time.

In other embodiments of the flanges (20b, 30b) above referred, said flanges (20b, 30b) may have folds (26b) and / or cuts (26c) located on its surface, like the ones observed in the disks having spherical protuberances (26) of Figures 34 and 35, with the purpose that the simple disks and the insertion bases above mentioned, do not rotate inside of the members in which they are inserted which, at the moment in which said members are rotating; wherein said folds (26b) and / or cuts (26c) are also surrounded by the material of said members (72 or 73).

The shape and appearance of the folds (26b) and of the cuts (26c) of the flanges (20b, 30b) above mentioned, should not be considered as a limitation for the present invention, because they are only mentioned and illustrated by way of example, so that its shape and appearance may vary, while complying with the objective of preventing the simple disks and insertion bases above mentioned, to rotate inside the members in which they are inserted.

In another embodiment, the simple disks above mentioned, may lack its flange (20b), similarly to the disk having spherical protuberances (26d) shown in Figure 33, wherein such simple disks, in order to be inserted between the material of the members (72 or 73) of the articulated mannequin, they have also, firmly attached, an ironwork having a flange (26e) which is very similar to the smooth disk (20) of the magnetic joining mechanism (37) above referred, wherein said ironwork having a flange (26e) is concentrically located on the flat surface (20a) of said disk without flange (26d); additionally, the flange (26f) of said ironwork having a flange (26e) can be diagonal (70) or type "Z" (71), and they may also have the folds (26b) and / or cuts (26c) above mentioned; in order to provide said simple disks with other alternatives to be inserted between the material of said members (72 and 73); also due to the fact that they not have a flange (20b) that surrounds them, their diameter will be smaller and therefore they can be more easily installed in the smallest members of the articulated mannequin of the present invention, such as: in the wrists of the hands (6b), in the ankles of the feet (8b) or in the elbows (5b).

The shape and appearance of the attaching means, such as the diagonal flange (70) and type "Z" (71), as well as the ironwork having a flange (26e) above mentioned should not be considered as limiting for the current invention, because they are only mentioned and illustrated by way of example, so that its shape and appearance may vary, while complying with the objective of being inserted between the material of the members (72 and 73) of the articulated mannequin of the present invention, thus avoiding that the simple disks and insertion bases mentioned above, be detached from such members.

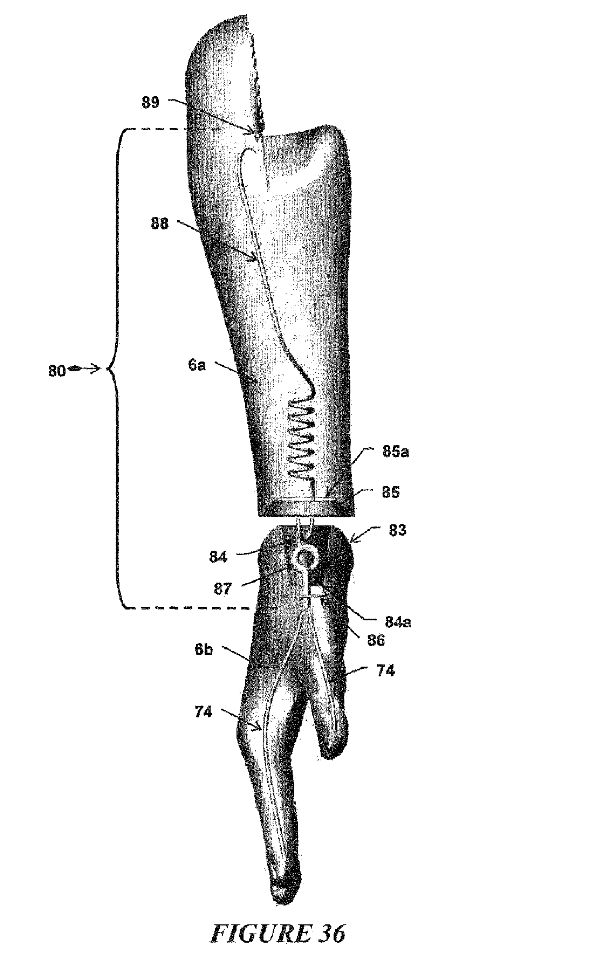

In other embodiments of the hands (6b) and feet (8b) above mentioned, their circular flat surface (65) above, is replaced by a partially spherical protuberance (83) with a conical cavity (84), as shown in Figure 36, wherein said partially spherical protuberance (83) is partially inserted in other embodiment of the forearms (6a) and calves (8a) above referred, which comprises a circular orifice (85a) concentrically located on its flat surface (65), in order to provide the forearms (6a) with the hands (6b) and the calves (8a) with the feet (8b), with a natural appearance in any position in which they are positioned.

In other embodiments of the forearms (6a) and calves (8a) above referred, their flat circular surface (65) above referred further comprises a partially spherical cavity (85); wherein the circular hole (85a) above mentioned, is located at the bottom of said partially spherical cavity (85), so that the diameter of said circular orifice (85a) is smaller, in order to provide said forearms (6a) and calves (8a) with other alternatives, in order that the forearms (6a) hands (6b) and calves (8a) with feet (8b), can have a natural look at any position in which they are positioned.

Figure 36 shows a second embodiment of the forearm (6a), in conjunction with the embodiment of the hand (6b) above referred, wherein said members (6a and 6b) are shown in a disassembled way and with its transparent cover to more clearly display the cavities (84 and 85) above mentioned and also to show the way in which said members (6a and 6b) are maintained assembled together by means of a compression kneecap mechanism (80) located in inside.

The compression kneecap mechanism (80) above referred and illustrated in Figure 36, comprises at least: a member (6b or 8b) with a partially spherical protuberance (83) with a vertical conical cavity (84), a member (6a or 8a) having a circular hole (85a) concentrically located on its circular flat surface (65) or a member (6a or 8a) with a partially spherical cavity (85) with a circular orifice (85a), a washer (86) with a threaded hole at its center, a closed eyebolt (87) and a compression spring (88), wherein said compression spring (88) has the shape of a hook at each of its ends.

Another embodiment of the flange (20b, 26f and 30b) of the simple disks, of the ironwork having a flange (26e) and of the insertion bases above mentioned, further comprises a perforation (89) located on its surface in order to allow the insertion of one of the two hooks of the compression spring (88) above referred through said perforation (89).

The manner of assembling the compression kneecap mechanism (80) above, is in accordance with the order of the components of Figure 36, which is explained below: the threaded washer (86) is concentrically positioned below the conical cavity (84) above referred, being inserted between the material of the hand (6b) and / or foot (8b) accordingly, because the outer diameter of said threaded washer (86) is greater than the diameter of the flat surface (84a) of the conical cavity (84), where is subsequently introduced the eyebolt (87) above referred through said conical cavity (84), until it is screwed in said threaded washer (86); subsequently the compression spring (88) above referred is inserted through the circular orifice (85a) of the partially spherical cavity (85) above referred, until one of the two hooks is inserted into the perforation (89) of the flange (20b, 26f and 30b) above referred; then said compression spring (88) is manually stretched by a tool (not illustrated), until the other hook engages the eyebolt (87) above referred, thereby achieving that the hands (6b) and / or feet (8b) remain firmly assembled with the forearms (6a) and / or calves (8a) respectively, and also achieving that said hands (6b) and / or foot (8b) can move in any direction, remaining in the assigned position, thanks to the compression force that the compression spring (88) above referred, will be exerting.

Another embodiment of the location of the perforation (89) of the flanges (20b, 26f, 30b) above referred, comprises that in the embodiments in which the forearms (6a) and / or calves (8a) are hollow (72), said perforation (89) may be located on the surface of said members (6a and 8a), in order to allow that said compression spring (88), can be engaged in a location different from the location of said flanges (20b, 26f and 30b).

Another embodiment of the form to assemble the compression kneecap mechanism (80) above referred, comprises that at least one of the hooks of the compression spring (88) above referred, has the form of a ring (not shown) , wherein the eyebolt (87) which is closed, will be replaced by an open eyebolt (not illustrated), and / or the perforation (89) of the flanges (20b, 26f, 30b) above referred, will be replaced by a hook (not illustrated) which is inserted inside the forearm (6a) and / or calf (8a) as appropriate, in order that said compression kneecap mechanism (80) can be differently assembled.

In other embodiment, the threaded washer (86) above referred, is replaced by a conventional washer (47), as seen in Figure 11, and by a conventional nut (52), as seen in Figure 13, wherein said conventional nut (52) is attached to said conventional washer (47), both being firmly inserted inside the hand (6b) and /or foot (8b) as appropriate, in order to provide another alternative where the eyebolt (87) can be screwed.

The shape and appearance of both the partially spherical cavity (85) and its circular orifice (85a), and the partially spherical protuberance (83) and its conical cavity (84) mentioned above are only mentioned and illustrated by way of example and should not be considered as limiting to the present invention, where for example, the geometric shape of said conical cavity (84), may be cylindrical, oval, square, etc. instead of being conical.

When the hands (6b) of the articulated mannequin are made of a flexible material, such as the material of the hand (6b) shown in Figure 36, independently of whether they are hollow (72) or solid (73), some flexible wires (74) can be inserted in their interior, which pass through the conical cavity (84) and through the central orifice of the threaded washer (86) above referred, being housed inside each finger, with the purpose that said fingers can be manually flexed, maintaining the position in which they were assigned; thus achieving that the articulated mannequin be able to grasp objects with its hands (6b), as well as that these hands (6b) can take a position such that it is consistent with the position taken by the articulated mannequin in which they are located.

In the cases where the hands (6b) are flexible and hollow (72), after the flexible wire (75) has been inserted inside said hands (6b), the interior of said flexible and hollow (72) hands (6b) will be filled with a flexible material (not illustrated), for example cotton or polyurethane, in order that said flexible wires (74) are not left loose in the interior of said hollow and flexible (72) hands (6b) and; in addition that any member of the articulated mannequin can be hollow (72), they can also be filled with a material that is at least flexible.

An embodiment of the articulated mannequin comprises that it lacks the lower section (9b), which is formed by: a hip (4), two lower hemispherical connecting pieces (1), two upper thighs (7a), two lower thighs (7b), two calves (8a) and two feet (8b), so that the articulated mannequin only has the top section (9a), which consists of: a head (2), a torso (3), two hemispherical connecting pieces (1) above referred, two biceps (5a), two elbows (5b), two forearms (6a) and two hands (6b), where the members of the upper section (9a) are assembled together, by means of the assembly mechanisms above mentioned, so it can be used to dress shirts, jackets, hats and / or ties, to name some examples; wherein said upper section (9a) and lower section 9b) may be observed in Figure 1.

Each arm (5) of the articulated mannequin is made by at least: a hemispherical connecting piece (1) above referred, a biceps (5a), an elbow (5b), one arm (6a) and a hand (6b); where said arms (5) have the following variants: the biceps (5a), elbow (5b), forearm (6a) and hand (6b) constitute a single member, the biceps (5a), elbow (5b) and forearm (6a) constitute a single member, the elbow (5b), forearm (6a) and hand (6b) constitute only one member, the biceps (5a) and elbow (5b) constitute a single member, and / or the forearm (6a) and hand (6b) constitute a single member, wherein said members are assembled together by means of assembly mechanisms above mentioned, in order that the articulated mannequin can have different types of articulated arms (5).

In other embodiments, the articulated mannequin, lacks its upper section (9a) above referred, so that the articulated mannequin only has the lower section members (9b) above referred, which are assembled to each other, by means of the mechanisms above mentioned, so it can be used to wear pants, shorts, socks and / or tennis, to name a few.

Each leg (7) of the articulated mannequin of the present invention is comprised of: an inferior hemispherical connecting piece (1), an upper thigh (7a), a lower thigh (7b), a calf (8a) and a foot (8b), wherein the legs (7) have the following variants: the upper thigh (7a), the lower thigh (7b), calf (8a) and foot (8b) constitute only one member, the upper thigh (7a), the lower thigh (7b) and calf (8a) constitute a single member, the lower thigh (7b), calf (8a) and foot (8b) constitute only one member, the upper thigh (7a) and lower thigh (7b) constitute a single member, and / or the calf (8a) and foot (8b) constitute a single member, wherein said members are assembled together by means of the assembly mechanisms above mentioned, in order that the articulated mannequin can have different types of articulated legs (5).

In another embodiment, the articulated mannequin lacks its lower thighs (7b), calves (8a) and foot (8b), so that the articulated mannequin can be placed on a flat surface at least with the circular flat surface (65) of one of its upper thighs (7a), as shown in Figure 1.

In other embodiment of the articulated mannequin of the present invention, its lower section (9b) above referred, constitute a single member, which is kept attached to the upper section (9a) by means of the assembly mechanism above referred, so that the lower section (9b) of said articulated mannequin is static, and its upper section (9a) is articulated.

In other embodiment, the articulated mannequin of the present invention is formed by at least two of the aforementioned members, which are maintained assembled together by means of the assembly mechanisms above referred, so that the articulated mannequin can be formed by only some of its members, as required.

A feature of the aforementioned members that constitute a single member, is that its shape resembles, at least, the anatomical shape of the correspondent members of the human body, where such members that constitute a single member, do no have intermediate joints.

The quantity, location and appearance of the members, joining points and assembly mechanisms of the articulated mannequin of the present invention, may vary, because they are only mentioned and illustrated by way of example and therefore should not be considered as limiting the present invention.

It should be mentioned that in order to exemplify the embodiments of the present invention, it was used the anatomical shape of the human body, whereby said anatomic shape may be of any other entity (not shown), such of an animal body, of a strange being or of an object, where said bodies may be covered by at least one flexible cover (not shown), in order to soften and / or conceal the edges of each member, as well as to hide the aforementioned joining points; thereby providing said bodies with an even more realistic appearance.

## Claims

1. An articulated mannequin, wherein it comprises:
i. A head (2), comprising a vertical cavity (2a) located on its bottom, which in turn comprises a hole (2b) located in its upper part
ii. a torso (3), comprising a neck (3c) inserted into the vertical cavity (2a) of the head (2), where said neck (3c) also being cylindrical at least in its upper part, also comprising a vertical cavity (3d) located concentrically in the inside, a fitting (93) and widened concentrically drilled in its bottom, is inserted under the cavity (3d) of the neck (3c), and that a screw (92) is fixed in the central hole of said fitting (93), where the torso (3) further comprises two horizontal cavities (3e) located at the lateral sides of its upper part, which bottom ends on a flat surface (3f);
iii. iii.at least a mechanism of double-joints (knee caps) (91') joins the head (2) with the torso (3), which is located inside the cavities (2a and 3d) (2) head and neck (3 c); where each knee cap (91) of the mechanism (91') includes, at least: a spherical bulge (91 b), a spherical cavity (9 c) and a central bore (91 e) that crosses longitudinally; where a first knee cap (91) is fixed to the screw (92) inserted in the cavity (3d) of the neck (3 c), leaving the screw (92) introduced to the central bore (91 e) of the first knee cap (91); while a second knee cap (91) joins with the first knee cap (91), surrounding with its spherical cavity (91 c) to the spherical bulge (91 b) from said first knee cap (91); and one of the ends of a rod (94) is introduced into the central bore (91 e) of the second knee cap (91), besides that the other end of the rod (94) is inserted into the hole (2b) of the cavity (2a) of the head (2).
iv. At least an upper hemispherical connection (1), is inserted horizontally in any of the horizontal cavities (3e) of the torso (3) , which is comprised by, at least a closed half-sphere portion (62) and a portion, preferably semi-cylindrical or closed semi-conical portion (63), both attached by a transition portion (64), so that the flat surfaces (65 and 66) of both portions (62 and 63) at least, perpendicular there between; where the flat surface (65) of the closed semi-cylindrical or semi-conical portion (63), is that makes contact with the flat surface (3f) of the horizontal cavities (3e) of the torso (3);
v. a first magnetic coupling mechanism (37) connected to the torso (3) with the upper semi-hemispherical connection piece (1), wherein said magnetic coupling mechanism (37) comprises at least two smooth discs (20) parallel to each other, one inserted in the flat surface (3f) of the horizontal cavity (3e) of the torso (3) and the other on the flat surface (65) of the semi-cylindrical portion closed or split cone (63) of the upper hemispherical connection piece (1), wherein said smooth discs (20) comprise anchoring means which are immersed in the material of the members to be joined, leaving a flat surface (20a) exposed and aligned with the flat surface (65 or 66) of the member in which they are inserted and at least one magnet (38) which is attached concentrically to one of the smooth discs (20) on its flat surface (20a), where the anchoring means is projected;
vi. at least one arm (5) comprising at one of its ends a closed half sphere portion (62) and a portion that is similar to the anatomical shape of an arm, both joined by a transition portion (64), where the flat surface (66) of the closed half sphere portion (62), is making contact with the flat surface (66) of the closed half sphere portion (62) of the hemispherical connection piece (1) above;
vii. one second magnetic coupling mechanism (37) connected to the arm (5) with the upper connecting semi-hemispherical piece (1), wherein one of the smooth discs (20) is inserted into the flat surface (66) of the closed semi-hemispherical portion (62) of the upper semi-hemispherical connection piece (1), and the other flat disc (20) on the flat surface (66) of the closed semi-hemispherical portion (62) of the arm (5).

2. The articulated mannequin of claim 1, wherein the anchoring means are at least: a perimetral tab (20b) projected with some angle towards one side of the smooth discs (20).

3. The articulated mannequin of the preceding claims, wherein the vertical cavity (2a) of the head (2) further comprises a cylindrical cavity (2c) concentrically located over the hole (2b) having in its upper part.

4. The articulated mannequin of claim 3, wherein the cylindrical cavity (2c) of the head (2) comprises at least one strangulating section (2d).

5. The articulated mannequin of the preceding claims, wherein the double knee cap joint mechanism (91 ') is replaced by a conventional knee cap (96) which have at least one base (96a) and a stem (96b).

6. The articulated mannequin of the preceding claims, wherein the double knee-cap mechanism (91 ') or the conventional knee-cap (96) further comprises a tube (95) located at the upper end of the rod (94) or the stem (96b), as appropriate.

7. The articulated mannequin of the preceding claims, wherein the torso (3) comprises at least: an upper torso (3a) and a lower torso (3b), to which it adds a magnetic coupling mechanism (37) at coupling point (10a) there between.

8. The articulated mannequin of the preceding claims, wherein the arm (5) comprises at least: a biceps (5a), an elbow (5b), a forearm (6a), a hand (6b) and all possible combinations among them, for which a magnetic coupling mechanism (37) is added at coupling points (12, 13, 81) there between.

9. The articulated mannequin of claim 8, wherein the biceps (5a), the elbow (5b) and the forearm (6a) have a configuration similar to the upper hemispherical connection piece (1), with the difference that its semi-cylindrical portion closed or split cone (63) resembles at least to the anatomical shape of a biceps (67), of an elbow and of a forearm respectively.

10. The articulated mannequin of the preceding claims, wherein further comprises a lower section (9b) is comprised by a single member, which extends from the hip (4) to the feet (8b), wherein said lower section (9b) remains attached to the lower torso (3), by at least one magnetic coupling mechanism (37).

11. The articulated mannequin of claim 10, wherein the lower section (9b) comprises at least:
i. A hip (4), which in turn comprises two horizontal recesses (4a) located on the lateral sides of the bottom, which bottoms end in a flat surface (4b);
ii. two lower semi-hemispherical connecting parts (1) similarly shaped as upper semi-hemispherical connecting pieces (1) described above in claim 1, where each one is inserted horizontally into the horizontal cavities (4a) of the hip (4);
iii. li. two legs (7), similarly shaped as the arm (5) described in claim 1, with the difference that the portion that resembles the anatomical shape of an arm, in this case is similar to the anatomical shape of one leg, where the flat surface (66) of the closed half sphere portion (62), is making contact with the flat surface (66) of the closed half sphere portion (62) of the lower connecting semi-hemispherical piece (1);
iv. at least one magnetic coupling mechanism (37), same as described in claim 1.

12. The articulated mannequin of claim 11, wherein the magnetic coupling mechanisms (37) are in the coupling points (15) between the horizontal cavities (4a) of the hip (4) and the lower connecting semi-hemispherical pieces (1), and at the coupling points (16) between said lower connecting semi-hemispherical pieces (1) and the legs (7).

13. The articulated mannequin of the preceding claims 11 and 12, wherein the legs (7) comprise at least: an upper thigh (7a), a lower thigh (7b), a calf (8a), a foot (8b) and all possible combinations among them, for which a magnetic coupling mechanism (37) is added at coupling points (17, 18, 82) there between.

14. The articulated mannequin of claim 13, wherein the upper thigh (7a), the lower leg (7b) and a calf (8a) have a configuration similar to the lower semi-hemispherical connection piece (1), with the difference that its semi-cylindrical or semi-conical closed portion (63) resembles at least to the anatomical shape of the top of a leg, a thigh and a calf respectively.

15. The articulated mannequin of preceding claims, wherein the flat surfaces (65) of the members, which are located at the connecting points (10, 12, 15, 17, 81 and 82) located: between the flat surfaces (3f) of horizontal cavities (3e) of the torso (3) and the lower connecting semi-hemispherical pieces (1); between the biceps (5a) and the elbows (5b) between the forearms (6a) and hands (6b), between the flat surfaces (4b) of the horizontal cavities (4a) of the hip (4) and the lower connecting semi-hemispherical pieces (1), between the upper thighs (7a) and lower thighs (7b) and between the calves (8a) and feet (8b), at least, they are circular flat surfaces (65).

16. The articulated mannequin of the preceding claims, wherein the smooth discs (20) further comprises a circular central hole (20c).

17. The articulated mannequin of preceding claims, wherein comprises at least one coupling mechanism of simple and free movement, which is formed by at least: two smooth discs (20), a movable screw (46) passing through the central hole (20c) of one of the smooth discs (20), and a conventional nut (52) which is concentrically fixed on the flat surface (20a) of the other flat disc (20), the side where its tab is projected (20b) so as to join both smooth discs (20), the free end of the movable screw (46) passes through the central hole (20c) of the second flat disc (20), until screwed into the nut to conventional (52).

18. The articulated mannequin of preceding claims, wherein comprises at least one coupling mechanism and free movement with radial loads, which configuration is similar to the mechanism described in claim 17, with the difference that one of the discs (22) has its central opening (20d) with a diameter such that it allows the passage of a radial thrust bearing (24), besides which also said disc (22) comprises a cylindrical compartment (22a) concentrically located about said central hole (20d), the side where its tab is projected (20b), wherein said cylindrical chamber (22a) comprises on its surface, a central hole (22b) of equal diameter the central hole (20c) of the flat disk (20), wherein said cylindrical chamber (22a) housing the radial thrust bearing (24).

19. The articulated mannequin of preceding claims, wherein it comprises at least one coupling mechanism and adjustable torque (50), which is configured similarly to the mechanism described in claim 18, with the difference that in the cylindrical compartment (22a) a torsion spring is housed (23), whereby the cylindrical compartment (22a) comprises at least one adjacent perforation (22c) on its surface, through which one end of the torsion spring passes (23); besides the other disc (21) comprises at least one adjacent perforation (21 a) through which the other end of the torsion spring (23).

20. The articulated mannequin of preceding claims, wherein it comprises at least one coupling mechanism and free movement to work with axial loads, which configuration is similar to the mechanism described in claim 17, with the difference that the two discs (25) comprise a perimetral circular groove (25a) on its flat surface (20a), on which several pellets 25b) or an axial thrust bearing (25c) are located.

21. The articulated mannequin of preceding claims, wherein it comprises at least one coupling mechanism and free movement with radial and axial loads, which configuration is similar to the mechanism described in claim 20, with the difference that one of the disks (22d) further comprises a cylindrical chamber (22a) with the same configuration as described in claim 18 wherein a radial thrust bearing (24) is housed.

22. The articulated mannequin of claims 17 to 21, wherein the conventional nut (52) is replaced by a screw located in the central hole (20c or 22b) of its respective disc (20, 21, 22, 22d or 25).

23. The articulated mannequin of claims 17 to 21, wherein the conventional nut (52) is replaced by a nylon insert nut or safety (57).

24. The articulated mannequin of claims 17 to 21, wherein the movable screw (46) is substituted by a screw hole (51 a) or groove (51 b), wherein the bore (51 a ') of said screw hole (51 a) is transverse to its cylindrical surface, and the groove (51 b ') of said grooved screw (51 b) is concentric and located around its cylindrical surface, as well as conventional nut (52) is replaced by a lock (51 c), which through said bore is introduced (51 a ') or around said groove (51 b').

25. The articulated mannequin of claims 17 to 23, wherein the movable screw head (46) is concentrically attached to its respective disk (20, 21, 22, 22d or 25) on the side where its tab is projected (20b), and being the above a fixed screw (41).

26. The articulated mannequin of preceding claims, wherein comprises at least one coupling and magnetic blocking mechanism (39), which is similar to the magnetic coupling mechanism (37) described in claims 1, 2 and 16, with the difference that their discs (26 and 27 or 29 and 29) comprise locking elements in addition to said mechanism (39) further comprises a fixed screw (41) with or without thread, which passes at least through a center hole (20c) of your disks (26, 27, or 29 and 29), being fixed in one of them (26, 27 or 29).

27. The articulated mannequin of claim 26, wherein the locking elements are at least: several spherical protuberances (26a) or spherical cavities (27a) arranged radially on the surface (20a) of the flat disk (20), opposite where its tab (20b) is projected and several concave and convex (29b) radial grooves (29a), located equidistantly about its flat surface (20a) and around its central hole (20c).

28. The articulated mannequin of the previous claims, which includes at least one coupling mechanism and adjustable blocking with fixed screw (40), which is similar to the coupling and magnetic blocking mechanism (39) described in claims 26 and 27; with the difference that magnets (38) are substituted by an expansion spring (42) and a square nut (43), both located in the interior of a square cover (44), which in turn is directly coupled to the flat surface (20a) of the disc (26, 27 or 29) contrary to that including the fixed screw (41), of the side where its tab is projected (20b); where the fixed screw (41) passes through the center hole (20c) on both discs (26 and 27, or 29 and 29), the spring expansion (42) and the square nut (43).

29. The articulated mannequin of claim 28, wherein the square cover (44) comprises a central hole (44a) located on its closed face, which also passes the fixed screw end (41).

30. The articulated mannequin of claims 28 and 29 wherein the geometric shape of the square nut (43) and / or square cover (44), is different from that of a square and a circle.

31. The articulated mannequin of claims 28 to 30, wherein the square nut (43) is replaced by a nut with a nylon or safety insert (57).

32. The articulated mannequin of the previous claims, which comprises, at least, a coupling mechanism and double adjustable blocking (53), which is similar to the coupling mechanisms and adjustable blocking with fixed screw (40) described in claims 28-31 with the difference that said coupling and double adjustable blocking mechanism with fixed screw (40), which are arranged concentrically one against the other, with their components facing in opposite directions; where the fixed screws (41) are substituted by a threaded rod (54) which passes, at least, by the central holes of the discs (26 and 27, and/or 29 and 29), of the springs (42) and the square nuts (43); where the threaded rod (54) is fixed, at least, to one of the discs (26, 27 or 29) that are located in the center of this coupling and double adjustable blocking mechanism (53).

33. The articulated mannequin of the preceding claims, wherein the threaded rod (54), the fixed screw (41), the perforated hole (51 a) and / or the slotted screw (51 b) are replaced by a hollow rod or a hollow screw, as appropriate, where its hollow besides being passed through, is also cylindrical and concentric with the cylindrical surface.

34. The articulated mannequin of preceding claims, wherein it comprises at least one coupling and adjustable blocking mechanism with mobile screw (45), which is similar to the coupling and adjustable blocking mechanism with fixed screw (40) described in claims 28 - 31, with the difference that the fixed screw (41) is replaced by a mobile screw (46).

35. The articulated mannequin according to claim 34, where the coupling and adjustable blocking mechanism with mobile screw (45) comprises a tube (48), located concentrically on the side where the tab is projected (20b) of the disc not containing the square cover (44); and a conventional washer (47) located on the opposite end of the tube (48); where the mobile screw (46) passes through, at least, by the middle holes of the conventional washer (47), of the tube (48), of the discs (26 and 27, or 29 and 29), of the spring (42) and the square nut (43).

36. The articulated mannequin of preceding claims, wherein the movable screw (46) of the mechanisms described in claims 17 to 21, 34 and 35, comprises a cover (49) which is attached concentrically to a conventional washer (47) or their respective disc (20, 21, 22, 22d, 25, 26, 27 or 29) as appropriate, the side where its tab is projected (20b), wherein the movable head of said screw (46) is located in the cavity (49b) of said cover (49).

37. The articulated mannequin of claim 36, wherein the screw cover (49) comprises a drilling guide (49a) located in the center of its closed side.

38. The articulated mannequin of preceding claims, wherein the geometric shape of the central hole (20c) of the smooth discs (20) described in claims 1 and 2 is different from a circle, thus forming a disc with central bore guide.

39. The articulated mannequin of the previous claims, where the tab (20b) of the discs mentioned above, also called single discs, is replaced by some other anchoring means; which is a fitting (26e) which includes at least one tab (26f) projected with some edge angle toward one of its sides, and a central hole of equal or greater diameter than the central hole (20c, 20d and 36a) of these single discs; where said fitting (26e) is placed concentrically on the flat surface (20a) of said simple discs, of the side that is in the interior of the members.

40. The articulated mannequin of the previous claims wherein because, at least, one of the single discs of the assembly mechanisms mentioned above, is replaced by a compound disc, which is comprised of, at least:
i. A coupling disc (31'), which is similar to those simple discs, with the difference that there is no tab (20b); in addition to that it includes in its flat surface (20a), several tapered holes (32) equally spaced, located around the central hole (20c, 20d and 36a);
ii. An insert base (30) comprised of, at least: a flat surface (30a), which comprises anchoring means that are immersed in the material of the members to couple, leaving the flat surface (30a) exposed and aligned with the flat surface (65 or 66) of the member in which it is found; where the flat surface (30a) of the insert base (30) includes at least a central hole (30c) of equal or greater diameter than the central hole (20c, 20d or 36a) of the coupling disc (31'), and multiple threaded holes (30e) aligned with the tapped holes (32) of the coupling disc (31'); where the coupling disc (31') is positioned concentrically on the flat surface (30a) of the insert base (30), with its tapered holes (32) aligned with the threaded holes (30e) in the insert base (30); with its conical holes (32) of the coupling disc (31'); where said coupling disc (31') is concentrically placed on the flat surface (30a) of the insert base (30), with its conical holes (32) aligned with the threaded holes (30e) of the insert base (30):
iii. iii several conical head screws (56), which are inserted through the conical holes (32) of the coupling disc (31'), until being threaded in the threaded holes (30e) of the insert base (30); being the head of said conical head screws (56) housed within the cavity of said conical holes (32).

41. The articulated mannequin of claim 40 wherein the anchoring means are at least one perimetral tab (30b), designed with a certain angle to one side of the insert base (30).

42. The articulated mannequin of preceding claims, wherein the tab (20b, 26f and 30b) of the anchoring means has at least the form of a diagonal (70) or of the letter "Z" (71).

43. The articulated mannequin of preceding claims, wherein the tab (20b, 26f and 30b) of the anchoring means has at least one fold (26b) and / or a slit (26c) on its surface.

44. The articulated mannequin of claims 40 to 43, wherein the insert base (30) further comprises a conical or cylindrical cavity (30d) located concentrically on its surface (30a), towards the side where its tab is projected (30b), where in this case the central hole (30c) and threaded holes (30e), are located on the flat surface of the conical or cylindrical cavity (30d), wherein the coupling disc (31 ') are housed in said conical or cylindrical cavity (30d).

45. The articulated mannequin of claims 40 to 44, wherein the insert base (30) comprises at least one peripheral circular groove (25a) located on its surface (30a), on which several pellets (25b) or a bearing axial load (25c) are located.

46. The articulated mannequin of claims 40 and 45, wherein the geometric shape of the conical holes (32) of the coupling discs (31 ') and the head of the screws with conical head (56), is different from that of a cone.

47. The articulated mannequin of preceding claims, wherein the simple discs and / or the coupling disc (31 ') comprise at least one partially circular groove (35c) in its surface (20a), which is passed to and concentric with its center hole (20c, 20d or 36a).

48. The articulated mannequin of preceding claims, wherein the simple discs and / or the coupling disc (31 ') comprise at least one mechanical, electrical, electronic, pneumatic and / or hydraulic device which is bonded to its flat surface (20a), the side that remains inside the member in which it is found.

49. The articulated mannequin of claim 48, wherein the devices are at least one motor (35), a piston and / or a sensor.

50. The articulated mannequin of the preceding claims, wherein at least one shaft section (35a) of the motor (35), of the threaded rod (54), of the fixed screws (41), and/or grooved screws (51 a) and / or (51 b) of the assembly mechanism, is not completely cylindrical.

51. The articulated mannequin of preceding claims, wherein comprises at least one coupling mechanism and automated movements (55), which is formed by at least: a composite disk, where a motor (35) is placed concentrically on the flat surface (20a) of its coupling disc (34); besides that the shaft (35a) of the motor (35) includes a screw-thread, at least, in a part of its cylindrical section; where said shaft (35a) passes through the center hole (20a) of the coupling disc (34) of said compound mechanism; a disc with central hole guide described in claim 38 or a second compound disc, where the shaft (35a) also passes through the center hole (36a) of the disc with central hole guide or the coupling disc (36) of the second disc made, up to be screwed into a nylon or safety insert nut (57), located on the side where projected tabs are located (20b or 30 (b) of the disc with central guide hole or the insert base (30) of the second compound disc, as the case may be.

52. The articulated mannequin of claim 51, wherein the axis (35a) of the motor (35) is replaced by a perforated or slotted shaft, and the nut with nylon or safety insert (57) is replaced by a lock (51 c); which configuration is similar to the screw hole (51 a) or grooved hole (51 b), and to the lock (51 c) as described in claim 24.

53. The articulated mannequin of the preceding claims, wherein at least one of the smooth discs (20) of the magnetic coupling mechanism (37) described in claims 1, 2 and 16, comprises at least one non-skid film located upon its flat surface (20a) of the opposite side where its tab is projected (20b).

54. The articulated mannequin of preceding claims, wherein the magnetic coupling mechanism (37) comprises at least one dividing laminate (37a) located between its two parallel flat discs (20), wherein said dividing laminate (37a) is a glass or other thin and flat object.

55. The articulated mannequin of preceding claims, wherein components and variants of some assembly mechanisms are combined with variants or components of other assembly mechanisms, to form various assembly mechanisms to the aforementioned mechanisms.

56. The articulated mannequin of preceding claims, wherein the flat surfaces (65, 66) of the members further include the shape observed from the outside of the assembly mechanisms when embedded in the members.

57. The articulated mannequin of the preceding claims, wherein the circular flat surface (65) of the members (6b, 8b), is replaced by a partially spherical bulge (83) with a cavity, at least, conical and vertical (84).

58. The articulated mannequin of the preceding claims, wherein the circular flat surface (65) of the members (6a and 8a) further comprises a circular concentric hole (85a) .

59. The articulated mannequin of claim 58, wherein the circular flat surface (65) of the members (6a and 8a) further comprises a partially spherical cavity (85), located concentrically on said flat circular surface (65), where the circular concentric hole (85a) is located to the bottom of said partially spherical cavity (85).

60. The articulated mannequin of preceding claims, wherein the tab (20b, 26f and 30b) of the simple discs, of the fitting with tab (26e) and the insert bases, has at least one perforation (89).

61. The articulated mannequin of claim 60, where the members have a perforation located on its surface, replacing the perforation (89) of the tab (20b, 26f and 30b) of the simple discs, the fitting with tab (26e) and insert bases.

62. The articulated mannequin of preceding claims, wherein comprises at least one knee-cap compression mechanism (80), which is formed by at least: a member (6b or 8b) with a partially spherical bulge (83) with a conical cavity (84), a washer (86) threaded at its central orifice which is concentrically positioned below said conical cavity (84), being inserted between the material of said member (6b or 8b), an eyebolt (87) is introduced through the conical cavity (84), until being screwed into the threaded washer (86), a compression spring (88) with a hook at each of its ends, which is inserted through the circular hole (85a) of the flat circular surface (65) of a member (6a or 8a), until one of its hooks is inserted at least in a bore (89) of the tab (20b, 26f, 30b) of a single disk, with a fitting with tab (26e) or base as appropriate insert, besides that the second compression spring hook (88), is engaged in the eyebolt (87), wherein finally the part-spherical bulge (83) of first member (6b or 8b), is partially inserted into the circular hole (85a) of the flat circular surface (65) of the second member (6a or 8a).

63. The articulated mannequin of claim 62, wherein at least one end of the compression spring (88) has the shape of a ring.

64. The articulated mannequin of claims 62 and 63, wherein the threaded washer (86) is replaced by a conventional washer (47) comprising at least one conventional nut (52) located concentrically on its surface.

65. The articulated mannequin of preceding claims, wherein the articulated mannequin members further comprises a drilling guide (61) located on its outer surface.

66. The articulated mannequin of the preceding claims, where members that comprise the above are hollow (72) or solid (73), as well as rigid or flexible.

67. The articulated mannequin of preceding claims, where the hands (6b), when they are flexible and hollow (72), or flexible or solid (73), comprise at least flexible wires (74) located inside the fingers.

68. The articulated mannequin of the preceding claims, wherein the hollow members (72) are filled with a material at least flexible.

69. The articulated mannequin of the preceding claims, wherein it is comprised by at least, two of the members mentioned above, for which an assembly mechanism at the coupling point of bondage between them is added.

70. The articulated mannequin of preceding claims, wherein the assembly mechanisms besides assembling different members, may also assemble equal members, members with complementary pieces (60) and complementary pieces (60) there between; wherein said complementary pieces (60) are at least, one member or a fitting such as a hook, a television base or a cup holder.

71. The articulated mannequin of the preceding claims, wherein the amount and location of their coupling points and their assembly mechanisms, is different from that of the preceding claims.

72. The articulated mannequin of the preceding claims, wherein the amount, location and appearance of its members is different from that of the preceding claims.

73. The articulated mannequin of the preceding claims, wherein members that comprise it, at least have the anatomical shape of the human body.

74. The articulated mannequin of claim 73, wherein the articulated mannequin which has, at least, the anatomical shape of the human body, and is covered by at least one flexible sheath.
